# EUROPÄISCHE PATENTSCHRIFT

(11) **EP 4 046 926 B1**
(45) Veröffentlichungstag und Bekanntmachung des Hinweises auf die Patenterteilung: **03.07.2024**
(21) Anmeldenummer: 21401005.0
(22) Anmeldetag: 18.02.2021
(51) Int. Cl.: B65B 69/00, B65G 69/18

(54) **VORRICHTUNG ZUM BEFÜLLEN VON SCHÜTTGUT AUS EINEM BEHÄLTER IN EINEN BEHÄLTERSACK**
DEVICE FOR FILLING BULK MATERIAL FROM A CONTAINER INTO A CONTAINER BAG
DISPOSITIF DE REMPLISSAGE DE MATIÈRES EN VRAC D'UN RÉCIPIENT DANS UN SAC DE RÉCIPIENT

(43) Veröffentlichungstag der Anmeldung: 24.08.2022
(73) Patentinhaber: J. Engelsmann AG, 67059 Ludwigshafen am Rhein (DE)
(72) Erfinder: Quindt, Viktor, 67433 Neustadt an der Weinstrasse (DE); Liedtke, Joachim, 68163 Mannheim (DE); Kretzau, Christian, 67480 Edenkoben (DE)
(74) Vertreter: Habermann Intellectual Property Partnerschaft von Patentanwälten mbB

(56) Entgegenhaltungen:
- EP-A1- 3 718 911
- WO-A1-2015/027350
- DE-B3-102019 110 413

## Beschreibung

Die Erfindung betrifft eine Vorrichtung zum Befüllen von Schüttgut gemäß dem Oberbegriff des Patentanspruchs 1.

Es ist bereits aus der EP 2 168 881 A2 ein Verfahren zum kontaminationsarmen Umfüllen von Füllgut aus einem ersten Behälter in einen zweiten Behälter bekannt, Der erste Behälter hat eine Umhüllung, welche in einen Auslauf mündet, der mit einem ersten Verschluss versehen ist. Über den ersten Verschluss hinaus erstreckt sich in Fortsetzung der Umhüllung ein flexibler Fortsatz. Zwischen dem ersten Behälter und dem zweiten Behälter ist eine Abfüllvorrichtung angeordnet, welche eine Röhre besitzt. Die Röhre ist zum Durchfluss des Füllguts beim Umfüllen aus dem ersten Behälter in den zweiten Behälter und auf ihrem Außenumfang zur Bevorratung einer Folie in Form eines Endlosliners bestimmt. Kennzeichnend für das Verfahren ist, dass eine zweite Dichtstelle aus einer Anordnung mit einer aktivierten Sekundärdichtung, einem über den Außenumfang der Sekundärdichtung geführten flexiblen Fortsatz der Folie, einem im Bereich der Sekundärdichtung äußerlich über den flexiblen Fortsatz der Folie geführten flexiblen Fortsatz der Umhüllung und einem im Bereich der Sekundärdichtung äußerlich über den flexiblen Fortsatz aufgebrachten ersten Spannelement gebildet wird. Ferner wird eine Vorrichtung zur Durchführung des Verfahrens vorgeschlagen.

Ferner ist ein Verfahren aus der WO 2005/056443 A1 bekannt, das sich auf kontaminationsvermeidende Entleerung von Schüttgut aus einem Behälter mit flexiblem Auslauf in eine nachgelagerte Einrichtung über ein Anschlussrohr bezieht, wobei das Verfahren folgende Verfahrensschritte aufweist: Anordnen des Behälters mit an einer Abbindestelle abgebundenem Auslauf oberhalb des Anschlussrohres, Anordnen einer Schlauchfolie um das Anschlussrohr herum so, dass sie gegen den einlaufseitigen Rand des Anschlussrohres dichtend anliegt, Abbinden der Schlauchfolie oberhalb des Anschlussrohres so, dass oberhalb der Abbindestelle ein trichterförmig aufweitbares Ende der Schlauchfolie verbleibt, klemmendes Verbinden von Auslauf des flexiblen Behälters und der Schlauchfolie so, dass über der Klemmverbindung freie Schlauchfolie verbleibt, Lösen der Abbindestellen von Auslauf und Schlauchfolie und Entleeren des Schüttguts, Zusammenfassen des oberhalb der Klemmstelle verbliebenen freien Endes der Schlauchfolie gegen den Behälterauslauf und Festlegen daran, Nachziehen von Schlauchfolie aus einem Schlauchfolienvorrat, bis oberhalb des Anschlussrohres saubere Schlauchfolie zur Verfügung steht, Verschließen der Schlauchfolie an zwei benachbarten Verschließstellen im sauberen Bereich, Durchtrennen der Schlauchfolie zwischen den beiden Verschließstellen, Nachziehen von Schlauchfolie aus dem Schlauchfolienvorrat und erneutes Abbinden derselben an einer Abbindestelle im Abstand von der Durchtrennungsstelle, Entfernen der Verschließstelle im Bereich der Durchtrennungsstelle und Ausbreiten der Schlauchfolie zwischen der Durchtrennungsstelle und der im Abstand von der Durchtrennungsstelle befindlichen Abbindestelle zu einer Trichterform.

Auch ist bereits aus der [EP 3041749 B1] eine Vorrichtung zum Umfüllen von Prozessmaterial zwischen einem ersten Behältnis (A) und einem zweiten Behältnis (B) mit: a) zumindest einer Spanneinheit bekannt, die einen ersten Spanner und einen zweiten Spanner aufweist, die voneinander unabhängig betätigbar sind; wobei: b) die zumindest eine Spanneinheit dazu bestimmt ist, temporär abgedichtet zu fixieren: a) allein einen der betreffenden Spanneinheit zugewandten Endabschnitt eines schlauchförmigen Linerstücks, das sich indirekt zwischen den Behältnissen (A,B) erstreckt, um den Übergang zwischen den Behältnissen (A,B) nach außen abzudichten; bb) allein einen der betreffenden Spanneinheit zugewandten Endabschnitt eines von einem vorherigen Umfüllvorgang stammenden schlauchförmigen Linerrests, der am anderen Ende mit einer ersten Abcrimpung verschlossen ist, - wobei an der Abbindestelle "crimpen" bedeutet, eine spezielle Art Folienschläuche zu verschließen; und bc) den einen Endabschnitt des -Linerstücks zugleich mit dem einen Endabschnitt des von einem vorherigen Umfüllvorgang stammenden Linerrests; und c) beide Spanner der jeweiligen Spanneinheit, dazu bestimmt sind, temporär gemeinsam den zugewandten Endabschnitt des Linerstücks oder gemeinsam den zugewandten Endabschnitt des von einem vorherigen Umfüllvorgang stammenden Linerrests abgedichtet zu fixieren; dadurch gekennzeichnet, dass d) beide Spanner der jeweiligen Spanneinheit zirkulär und in Relation zur Längserstreckung des Linerstücks zueinander konzentrisch angeordnet sind.

Ferner ist eine Vorrichtung (DE 1 2019 110 413 B3) zum Entleeren von Schüttgut aus einem Behälter (Fig. 21) in einen schlauchförmigen Behältersack (4), der in einem Aufnahmeteil oder Auffanggehäuse (9) aufgenommen und dessen eines oberes Ende nach dem Umfüllvorgang verschlossen werden kann, während das zweite oder untere Ende des Behältersacks (4) mit Hilfe von mindestens drei mit Bezug auf eine Mittelachse des Auffanggehäuses (9) koaxial angeordneten Dichtungsringen (1, 2, 3) derart verschlossen werden kann, dass insbesondere auch sehr kleine Partikel nicht nach außen in die Umgebungsluft abgegeben werden. Die einzelnen druckbeaufschlagbaren Dichtungsringe (1, 2, 3) jeweils sind versetzt zueinander angeordnet und der in Füllrichtung gesehen obere oder erste Dichtungsring (1) mit einem Deckel oder Ringflansch (5) und der mittlere oder zweite Dichtungsring (2) mit einem Stutzen oder Anschlussteil (14) für das Auffanggehäuse (9) und der darunter liegende dritte, versetzt angeordnete Dichtungsring (3) mit dem Deckel oder Ringflansch (5) in Kontakt steht, wobei der schlauchförmige Teil des Behältersacks (4) zwischen die eine Seite des dritten oder unteren Dichtungsrings (3) und der gegenüberliegenden Wand des Aufnahmeteils oder Auffanggehäuses (9), dann um einen ersten Steg (29) und eine daneben liegende Nut (28) und abschließend zwischen einem Wandteil (48) des Stutzens oder Anschlussteils (14) oder der Wand des Auffanggehäuses (9) des Stutzens (14) oder Anschlussteils für das Auffanggehäuse und dem ersten im Deckel oder Ringflansch (5) vorgesehenen Dichtungsring (1) geführt ist. Hierdurch ist zwar ein einwandfreies Entleeren des Schüttguts möglich, jedoch kein Befüllen oder Umfüllen von einem Behälter in einen anderen Behälter, weil sich dann Staubpartikel in den einzelnen Zwischenräumen ansammeln würden, die dazu beitragen, dass Staubpartikel in die Umgebungsluft gelangen.

Auch ist eine Umfüllvorrichtung zum kontaminationsgeschützten Überleiten von fließfähigem Prozessmaterial zwischen einem ersten Behältnis (A) und einem zweiten Behältnis (B) bekannt (EP 3 718 911 A1). Die Umfüllvorrichtung besitzt eine Leitröhre mit einem Axialdurchgang für den Durchfluss des Prozessmaterials, welche an einem Ende ein Anschlussmittel besitzt und am an,deren Ende mit einem Röhrenrand abschließt. In die Leitröhre mündet eine Transfereinheit, welche den Eingriff in die Leitröhre erlaubt. Auf der Transfereinheit ist ein schlauchförmiger Linervorrat mit einer Vielzahl abziehbarer Nutzabschnitte, die jeweils mit einer ersten Abcrimpung versehen sind, ge¬peichert. Mit den Nutzabschnitten lassen sich Linerreste von vorherigen Um¬füllvorgängen isoliert zur Entsorgung ausschleusen. Ein erster Spanner und ein zweiter Spanner sind zirkulär an der Leitröhre und konzentrisch zueinander angeordnet, die dem temporären abgedichteten Fixieren von Restenden und offenen Enden neuer Linerstücke dienen, welche von Innenlinern aus den zweiten Behältnissen stammen. Mit einer zur Umfüllvorrichtung gehörenden beweglich gelagerten Anpresseinheit wird eine erhöhte Dichtheit erzielt, um zu vermeiden, dass das Prozessmaterial weder von der äußeren Umgebung ver¬unreinigt wird noch in die Umgebung gelangen kann.

Schließlich ist eine Umfüllvorrichtung zum kontaminationsgeschützten Überleiten von fließfähigem Prozessmaterial zwischen einem ersten Behältnis (A) und einem zweiten Behältnis (B) bekannt (WO2015/027350A1). Die Umfüllvorrichtung besitzt eine Leitröhre mit einem Axialdurchgang für den Durchfluss des Prozessmaterials, welche an einem Ende ein An-schlussmittel besitzt und am anderen Ende mit einem Röhrenrand ab-schließt. In die Leitröhre mündet eine Transfereinheit, welche den Eingriff in die Leitröhre erlaubt. Auf der Transfereinheit ist ein schlauchförmiger Linervorrat mit einer Vielzahl abziehbarer Nutzabschnitte, die jeweils mit einer ersten Abcrimpung versehen sind, gespeichert. Mit den Nutzabschnitten lassen sich Linerreste von vorherigen Umfüllvorgängen isoliert zur Ent-sorgung ausschleusen. Ein erster Spanner und ein zweiter Spanner sind zirkulär an der Leitröhre und konzentrisch zueinander angeordnet, die dem temporären abgedichteten Fixieren von Restenden und offenen Enden neuer Linerstücke dienen, welche von Innenlinern aus den zweiten Be-hältnissen stammen. Mit einer zur Umfüllvorrichtung gehörenden beweglich gelagerten Anpresseinheit wird eine erhöhte Dichtheit erzielt, um zu ver-meiden, dass das Prozessmaterial weder von der äußeren Umgebung verunreinigt wird noch in die Umgebung gelangen kann. Die bekannten Vor-richtungen sind aufwändig und teuer.

Der Erfindung liegt die Aufgabe zugrunde, die Vorrichtung zum Befüllen und/oder Umfüllen von Schüttgut aus einem Behälter in einen schlauchförmigen Behältersack auf einfache und kostengünstige Weise herzustellen, sodass die hierzu verwendeten Dichtungen einfach zu aktivieren und/oder anzuordnen und zu verstellen sind, wobei sich keine Partikel in den durch die Dichtungen gebildeten Zwischenraum ansammeln und in die Umgebungsluft gelangen können.

Die Aufgabe wird erfindungsgemäß dadurch gelöst, dass in Füllrichtung gesehen der untere oder erste Dichtungsring an den beweglichen Deckel oder Ringkörper angeschlossen ist, wobei mit Bezug auf die Querebene der zweite Dichtring mit Abstand zum ersten Dichtungsring in etwa auf dem gleichen Durchmesser angeordnet ist und der Außendurchmesser der dritten Dichtung mit der zweiten Dichtung einen Zwischenraum oder Spalt mit Bezug auf die Mittelachse der Vorrichtung bildet, in den ein am Ringkörper angeschlossener Steg eingeschoben ist und den schlauchförmigen Behältersack abdichtet Behältersack abdichtet, wenn dieser in dem Zwischenraum oder Spalt eingeklemmt ist.

Durch die vorteilhafte Anordnung von zumindest zwei oder mehreren Dichtungen und zumindest einem zwischen zwei oder mehreren Dichtungen vorgesehenen nur nach unten offenen Zwischenraum wird erreicht, dass sich keine Staubpartikel in dem zwischen den Dichtungen vorgesehenen Zwischenraum Schmutzpartikel ansammeln können, auch dann nicht, wenn der zu entsorgende schlauchförmige Einfüllstutzen oder Behältersack aus dem Zwischenraum zwischen den Dichtungen eingeführt oder entfernt wird.

Ferner ist es vorteilhaft, dass der am verstellbaren und/oder automatisch absenkbaren Deckel angeordnete, mit Bezug auf den Behälter nach oben ausgerichtete Steg, mit der daran angeschlossenen ersten Dichtung zwischen die zweite und dritte Dichtung von unten hereingeschoben ist und das Ende des schlauchförmigen Behältersacks um den Steg geführt und gegen die am feststehenden Gehäuse angeschlossene Dichtung und die Dichtung anliegt oder angelegt werden kann.

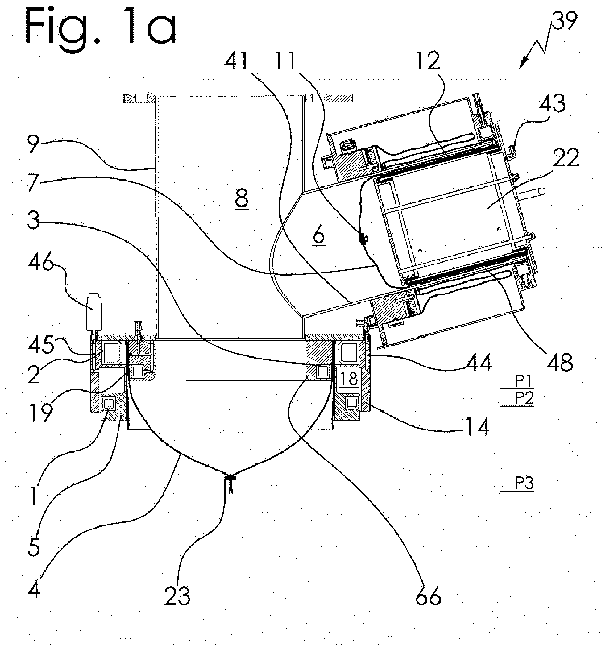

Bei der erfindungsgemäßen Vorrichtung ist es von Vorteil, dass der Anschluss des schlauchförmigen Einfüllstutzens (Fig 1a bis 14b) leichter zu handhaben ist, da eine erfindungsgemäße Automatisierung bei verschiedenen Arbeitsschritten eingesetzt wird. Hierzu gehört das automatisierte Absenken des Deckels und Einbringen des schlauchförmigen Einfüllstutzens in die Nut zwischen zwei Dichtungen. Diese automatische Absenkung des Deckels und Einbringung des schlauchförmigen Einfüllstutzens ist durch den bisher bekannt gewordenen Stand der Technik nicht vorgesehen.

Vorteilhaft ist es auch, dass zum Umfüllen des schüttfähigen Guts, der bewegliche Deckel vom unteren Teil des Gehäuses abgesenkt ist und zur Aufnahme eines weiteren schlauchförmigen Behältersacks dient, dessen Ende um den Steg und die erste Dichtung gelegt ist. Hierdurch wird der Umfüllprozess erleichtert und sichergestellt, dass durch die vorteilhafte Anordnung der Dichtungen und der Verschlussmöglichkeit des Folienschlauchs und des Behältersacks keine Schmutzpartikel in die Umgebungsluft gelangen.

Ferner ist es vorteilhaft, dass der erste Behältersack über einen am Gehäuse seitlich angeordneten Auslassstutzen entfernt werden kann und der zweite Behältersack über einen Verschluss verschlossen und durch Entfernen geöffnet werden kann, sodass das schüttbare Gut in einen dritten Behältersack umgefüllt wird, der mit Hilfe von einem ersten oder oberen und einem zweiten oder unteren Verschluss verschlossen ist.

Vorteilhaft ist es auch, dass ein mit dem oder den Behältersäcken verbundener Druckluftkanal an eine Druckluftleitung oder die Dichtungen zur Messung der Dichtigkeit des Behältersacks oder der Behältersäcke angeschlossen ist.

In weiterer Ausgestaltung der Erfindung ist es vorteilhaft, dass der Steg als ringförmiger Steg ausgebildet ist, der an dem verstellbaren Deckel oder einem Ringkörper angeschlossen ist, der als flacher oder dünner ringförmiger Baukörper ausgebildet ist.

Vorteilhaft ist es auch, dass der Steg oder der flache oder dünne ringförmige Baukörper mit Bezug auf die Standfläche des Behälters nach oben oder in Richtung einer Einlassöffnung oder einer oberen Einlassöffnung des Behälters ausgerichtet ist, in etwa parallel zur Längsmittelachse des Behälters verläuft und koaxial zur Längsmittelachse des Behälters ausgerichtet ist.

Auch ist es von Vorteil, dass der Steg oder der flache oder dünne ringförmige Baukörper mit dem Deckel auf- und abwärts in Richtung der Längsmittelachse verstellt werden kann und von unten her in den Spalt zwischen zwei Dichtungen eingeschoben oder herausgeführt werden kann und zur Aufnahme eines Teils des Folienschlauchs dient und das eine oder obere Ende des Spalts mit Hilfe einer Dichtung oder einer am dem einen Gehäuseteil angeschlossenen Bauteil oder einem Dichtelement verschlossen werden kann.

In weiterer Ausgestaltung der Erfindung ist es vorteilhaft, dass der Steg in Verbindung mit den beiden Dichtungen und einem Teil des Folienschlauchs eine Dichtungsvorrichtung bilden mit deren Hilfe der Behältersack mit Hilfe einer Stellvorrichtung oder einer pneumatischen Anlage gesichert und/oder abgedichtet werden kann.

Weitere Vorteile und Einzelheiten der Erfindung sind in den Patentansprüchen und in der Beschreibung erläutert und in den Figuren dargestellt.

Dabei zeigen:
- Fig. 1a: einen schlauchförmigen oder verformbaren Einfüllstutzen, der mit einem Verschluss abgebunden und unter der Abbindestelle abgetrennt ist;
- Fig. 1b: eine perspektivische Darstellung der Gesamtvorrichtung,
- Fig. 2: eine vierte und fünfte Dichtung, die aktiviert sind, um den Folienschlauch so abzudichten, dass möglichst wenig Staub in den Folienschlauch gelangen kann;
- Fig. 3: die äußere oder erste Dichtung und die innere oder dritte Dichtung sind entlastet und der Deckel ist auf die unterste Position P3 abgesenkt, wobei die Enden des schlauchförmigen Einfüllstutzens mit Klebestreifen (26) fixiert sind und die mittlere oder zweite Dichtung 2 noch aktiviert ist;
- Fig. 4: der schlauchförmige Einfüllstutzen ist noch in der mittleren oder zweiten Dichtung gehalten und abgedichtet, wobei neue schlauchförmige Einfüllstutzen auf den Deckel gezogen sind;
- Fig. 5: der Deckel wird auf die mittlere Position P2 angehoben und die äußere oder erste Dichtung ist aktiviert, wobei die mittlere oder zweite Dichtung aktiviert bleibt und dadurch den ersten schlauchförmigen Einfüllstutzen hält;
- Fig. 6a: der Deckel ist auf die mittlere Position P2 angehoben und die äußere oder erste Dichtung ist aktiviert, wobei die mittlere oder zweite Dichtung aktiviert bleibt und dadurch den ersten schlauchförmigen Einfüllstutzen hält,
- Fig. 6b: ein Ausschnitt aus Fig. 6a, wobei die Dichtungen vergrößert dargestellt sind;
- Fig. 7a: eine vergrößerte Darstellung des Stutzenverschlusses;
- Fig. 7b: die vierte und fünfte Dichtung werden entlastet, wobei der Stutzenverschluss aus dem Auslassstutzen entnommen ist;
- Fig.7c a: und b Teilansichten des Stutzenverschlusses;
- Fig. 7d: eine perspektivische Darstellung des Stutzenverschlusses;
- Fig. 8: ein Bediener greift mit der Hand in den Auslassstutzen und ist dabei mit Hilfe des Folienschlauchs vor einer Kontamination geschützt, bei dieser Aktion ergreift er den schlauchförmigen Einfüllstutzen, um ihn in den Folienschlauch zu ziehen;
- Fig. 9: der schlauchförmige Einfüllstutzen ist im Folienschlauch durch den Auslassstutzen nach außen gezogen;
- Fig. 10: der Folienschlauch ist mit dem darin enthaltenen vorherigen schlauchförmigen Einfüllstutzen mit zwei Verschlüssen abgebunden, wobei anschließend das Ende des Folienschlauchs, mit dem darin eingeschlossenen vorherigen schlauchförmigen Einfüllstutzen zwischen diesen beiden Verschlüssen abgetrennt ist;
- Fig. 11a: der Stutzenverschluss ist wieder in den Auslassstutzen eingesetzt, die Dichtungen sind betätigt, wobei der Deckel auf die oberste Position P1 angehoben ist und die äußere Dichtung mit dem erforderlichen Druck beaufschlagt ist, sodass der schlauchförmige Einfüllstutzen dicht angeschlossen ist und gleichzeitig den Deckelhub zulässt;
- Fig. 11b: der Steg des Deckels drückt den schlauchförmigen Einfüllstutzen umlaufend in die Nut der mittleren Dichtung, wobei die mittlere Dichtung und die innere Dichtung nicht aktiviert sind;
- Fig. 12a: der Deckel wird auf die mittlere Position P2 abgesenkt, wobei die äußere Dichtung mit dem erforderlichen Druck beaufschlagt ist, sodass der schlauchförmige Einfüllstutzen dicht ist und gleichzeitig den Deckelhub zulässt.
- Fig. 12b: der Steg des vierten Deckels ist dabei aus der Nut von der mittleren oder zweiten Dichtung gezogen und die zweite Dichtung ist gleichzeitig mit einem definierten Druck aktiviert, sobald der Deckel die mittlere Position P 2 erreicht hat, ist die mittlere Dichtung mit dem vollen Druck versorgt, wobei die äußere Dichtung 1 und die innere Dichtung ebenfalls mit dem vollen Druck aktiviert sind;
- Fig. 13: der schlauchförmige Einfüllstutzen ist aufgebunden und der Behältersack befüllt, wobei alle Dichtungen 1, 2 und 3 mit dem vollen Druck aktiviert sind;
- Fig. 14a: der schlauchförmige Einfüllstutzen ist nach der Befüllung des Behältersacks mit zwei Verschlüssen abgebunden;
- Fig.14b: anschließend wird der schlauchförmige Einfüllstutzen zwischen diesen Verschlüssen abgetrennt, wobei alle Dichtungen 1, 2 und 3 mit dem vollen Druck aktiviert sind. Dies entspricht der beschriebenen Ausgangssituation und der nächste Entleervorgang kann mit der gleichen Vorgehensweise stattfinden;
- Fig. 15a: für jeden Befüllvorgang ist ein Stück des Folienschlauchs verbraucht, wobei der Folienschlauch axial gefaltet ist, so dass er eine Länge von mehreren Metern erreicht und dadurch die Verbrauchsmenge zum Beispiel 0,4 m pro Befüllung sein könnte, sowie die Gesamtlänge des Folienschlauchs 15 m beträgt;
- Fig. 15b: der Folienschlauch ist in der umlaufenden Nut eingeklemmt und abgedichtet, wobei dies dadurch erreicht wird, dass der bewegliche Ring gegen die Dichtung gepresst ist, wobei das Klemmen des Folienschlauchs auf Verbrauchsmaterial wie z. B. ein O-Ring für die Befestigung und Abdichtung des Folienschlauchs verzichtet und die Anpresskraft des beweglichen Rings auf unterschiedliche Antriebe - mit oder ohne Hilfsenergie erzeugt - mechanisch, magnetisch, pneumatisch, elektrisch angetrieben werden kann;
- Fig. 16: mit jeder Befüllung ist etwas von dem Folienschlauch 7 verbraucht. Um einen neuen Folienschlauch 7 über den bestehenden zu stülpen, sind die Dichtungen 10 und 12 entlastet und der Stutzenverschluss 22 und das Gehäuse 35 entfernt;
- Fig. 17: die Enden des Folienschlauchs sind nach vorne gefaltet;
- Fig. 18: es ist ein neuer Folienschlauch über den Rest des Folienschlauchs gestülpt und auf den Stutzenabsatz gezogen, wobei das Ende des neuen Folienschlauchs mit einem Verschluss verschlossen ist;
- Fig. 19a: der neue Folienschlauch ist mit dem Spannelement auf dem Stutzenabsatz fixiert und abgedichtet;
- Fig. 19b: ein Spannelement;
- Fig. 20: zeigt, dass der Bediener mit der Hand in den Auslassstutzen 6 eingegriffen hat und dabei den im Auslassstutzen befindlichen Folienschlauch 7' und den Rest des vorherigen Folienschlauchs 7 kontaminationsfrei in den neuen Folienschlauch 7` hineinzieht;
- Fig. 21: zeigt, dass der Folienschlauch 7' mit dem darin enthaltenen vorherigen Folienschlauch 7 nach außen gezogen werden kann. Der Folienschlauch 7'ist mit Hilfe von zwei Verschlüssen 11'abgebunden. Der zu entfernende Folienschlauch 7' wird zwischen diesen beiden Verschlüssen11'abgetrennt und mit dem innenliegenden Folienschlauch 7 entfernt.
- Fig. 22a: hier wird der neue Folienschlauch 7' mit einem Hilfsmittel, wie einem Seil oder einer Schablone, in die umlaufende Nut 36 des Spannelements gedrückt und mit einer Andrückvorrichtung 38 gehalten, anschließend wird der Folienschlauch 7' mit dem beweglichen Ring gegen die Dichtung gedrückt und somit fixiert und abgedichtet und anschließend das Ende des Folienschlauchs 7' wieder in den Auslassstutzen eingebracht;
- Fig. 22b: zeigt ein erstes Ausführungsbeispiel einer Klemm- und Abdichtvorrichtung, wobei der bewegliche Ring den Folienschlauch gegen die Dichtung 13 klemmt;
- Fig. 22c: zeigt, dass die Magnete die Hubbewegung des beweglichen Rings erzeugen, wenn die Gewindemutter auf der Gewindespindel gelöst wird;
- Fig. 22d: hier erzeugt der Pneumatik- oder Elektrozylinder die Hubbewegung des beweglichen Rings 33;
- Fig. 22e: zeigt das Zahnstangengetriebe, das die Hubbewegung des beweglichen Rings erzeugt;
- Fig. 22f: der Kniehebelspanner erzeugt die Hubbewegung des beweglichen Rings;
- Fig. 22g: der Excenter erzeugt die Hubbewegung des beweglichen Rings;
- Fig. 22h: die Gewindespindel erzeugt die Hubbewegung des beweglichen Rings;
- Fig. 22i: die pneumatische Dichtung erzeugt die Hubbewegung des beweglichen Rings,
- Fig. 23: der neue Folienschlauch ist installiert, nun wird zuerst das Gehäuse montiert und dann der Stutzenverschluss wieder eingesetzt, anschließend wird die Dichtung aktiviert, um den Folienschlauch so abzudichten, dass möglichst wenig Staub in den Folienschlauch gelangen kann.

In Fig. 1a ist eine Vorrichtung 39 bzw. eine Gesamtanlage zum Befüllen und / oder Umfüllen von Schüttgut dargestellt, mit deren Hilfe ein Behältersack 55 kontaminationsfrei über einen schlauchförmigen Behältersack 4 befüllt werden kann.

Der Behältersack 4 ist hierzu an einem Gehäuse 8 oder einer Wand 9 des Gehäuses 8 zwischen Dichtungen 2, 3 eingeklemmt. Hierzu ist zwischen den beiden mit Druckluft beaufschlagten Dichtungen 2, 3 eine Nut 28 vorgesehen, in die das Ende des Behältersacks 4 eingeschoben ist. Dichtungen 10 und 12 im Auslassstutzen 6 sind, wie nachfolgend noch erläutert, aktiviert, um ein Folienschlauch 7 so abzudichten, dass kein Staub in den Folienschlauch gelangen kann.

Der Steg ist als ringförmiger Steg 19 ausgebildet, der an den verstellbaren Deckel 5 oder Ringkörper angeschlossen ist, der als flacher oder dünner ringförmiger Baukörper und mit Bezug auf die Standfläche des Behälters 8 nach oben oder in Richtung einer Einlassöffnung oder einer oberen Einlassöffnung des Behälters 8 ausgerichtet ist und in etwa parallel zu einer Längsmittelachse 85 des Behälters 8 verläuft.

Ferner ist der Steg 19 oder der flache oder dünne ringförmige Baukörper koaxial zur Längsmittelachse 85 des Behälters (8) ausgerichtet.

Der Steg 19 oder der flache oder dünne ringförmige Baukörper kann mit dem Deckel 5 auf- und abwärts in Richtung der Längsmittelachse 85 verstellt werden und von unten her in einen Spalt 28 zwischen zwei die Dichtungen 2, 3 eingeschoben oder herausgeführt werden. Ferner ist es möglich, dass der Spalt 28 zur Aufnahme eines Teils des Folienschlauchs 4 dient und dass eine oder obere Ende des Spalts 28 mit Hilfe einer Dichtung oder einer am einem Gehäuseteil 14 angeschlossenen Bauteil oder einem als Platte ausgebildeten Dichtelement 87 an seiner oberen Seite verschlossen werden kann. Das als Platte ausgebildete Dichtelement 87 ist an dem Gehäuseteil 14 und an die äußere Wand 9 des Gehäuses 8 angeschlossen.

Der Steg (19) bildet in Verbindung mit den beiden Dichtungen 2, 3 und einem Teil des Folienschlauchs eine Dichtungsvorrichtung, mit deren Hilfe und mit Hilfe der Dichtungen und einer Stellvorrichtung oder einer pneumatischen Anlage der Behältersack 4 gesichert und/oder abgedichtet werden kann.

Nach dem Umfüllvorgang des Schüttguts aus dem Gehäuse 8 in den über einen Verschluss 23 abgebundenen Behältersacks 4 kann dieser über den Auslassstutzen 6, wie nachstehend beschrieben, entsorgt werden.

Der schlauchförmiger Behältersack 4 entsteht dadurch, dass sein unteres Ende mit Hilfe eines Verschlusselements 23 abgebunden wird.

Das zweite oder obere Ende des Behältersacks 4 wird mit Hilfe von mindestens drei mit Bezug auf eine Mittelachse des Gehäuses 8 koaxial angeordneten Dichtungsringen 1, 2, 3 (Fig.1a) in nachfolgend beschriebenen Arbeitsschritten derart verschlossen, dass insbesondere beim Befüllen und Umfüllen des Schüttguts auch keine bzw. sehr kleine Partikel nach außen in die Umgebungsluft abgegeben werden.

Die einzelnen druckbeaufschlagbaren Dichtungsringe 1, 2, 3 sind mit Bezug auf die Längsmittelachse 85 der Vorrichtung 39 zum Befüllen von Schüttgut jeweils untereinander versetzt und mit Abstand zueinander angeordnet.

An dem beweglichen Deckel 5 ist die erste Dichtung 1 fest angeordnet und gemeinsam mit dem beweglichen Deckel 5 auf- und abwärts verstellbar.

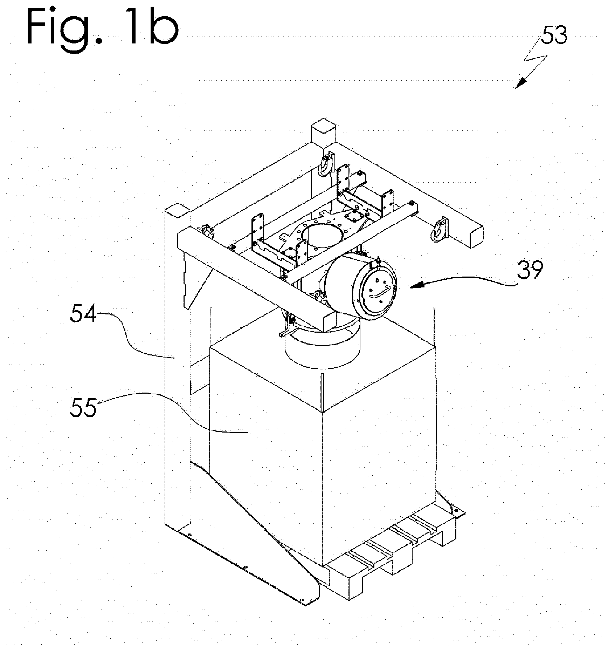

Der bewegliche Deckel 5 weist den aufrechtstehenden Steg 19 auf, der in die eine Nut 28 eingeschoben werden kann, sodass das eine Ende des Schlauchs des Behältersacks 4 um den Steg 19 herumgeführt und zwischen den beiden aktivierten Dichtungen (Fig. 1) abgedichtet werden kann.

Die drei Dichtungen bestehen aus einem Hohlprofilkörper, dessen Querschnitt entweder rund, mehreckförmig oder auch rechteckförmig ausgebildet sein kann. Die erste und äußere Dichtung 1 weist in etwa den gleichen Außendurchmesser auf wie die Dichtung 2, die oberhalb der beiden Dichtungen 1 und 3 angeordnet ist.

Der schlauchförmiger Behältersacks 4 ist mit seinem oberen Ende zwischen die sich gegenüberliegenden Profile der Dichtungen 2 und 3 geführt und wird, wie nachfolgend beschrieben, durch die Dichtung 3 abgedichtet. Die aktivierte mit Druckluft beaufschlagte Dichtung 3 wird, wie später dargestellt, den Folienschlauch gegen den Steg 19 des Deckels 5 anpressen.

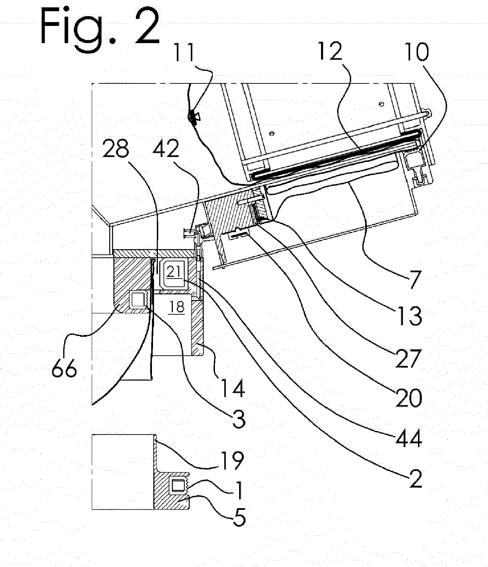

Die Gesamtanlage 53 weist gemäß Fig.1b unter anderem mindestens ein Traggestell 54 auf, in dem der mit Schüttgut befüllte Behältersack 55 aufgenommen ist, sodass das Schüttgut in den darunter vorgesehenen Auffangsack bzw. in den schlauchförmigen Behältersack 4 umgefüllt werden kann. Die vierte Dichtung 10 und die fünfte Dichtung 12 (Fig. 2) sind aktiviert, um den Folienschlauch 7 so abzudichten, dass möglichst wenig oder kein Staub in den Folienschlauch 7 gelangen kann.

Die äußere oder erste Dichtung 1, die mittlere oder zweite Dichtung 2 und die innere oder dritte Dichtung 3 können je nach Verfahrensstand mittels Druckluft über eine in der Zeichnung nicht dargestellten Druckluftanlage aktiviert. Alle Dichtungen 1-3 sind jeweils auf einer unterschiedlichen Höhe angeordnet.

Die zweite Dichtung 2 ist an dem feststehendem Gehäuse 8 bzw. an ein am Gehäuse 8 der Vorrichtung 39 angeordneten äußeren Gehäuseteil 14 angeschlossen.

Die dritte Dichtung 3 ist mit Bezug auf die Längsrichtung des Gehäuses zwischen der ersten und der zweiten Dichtung 1, 2 an dem feststehenden Gehäuse 8 der Vorrichtung 39 oder einem inneren Gehäuseteil 66 der Vorrichtung 39 angeordnet.

Gemäß Fig. 1a ist der Behältersack 4 mit einem Verschluss 23 abgebunden und kann unter der Abbindestelle abgetrennt werden, wie nachfolgend beschrieben.

Je nach Verfahrensstand können die Dichtungen mit Druckluft versorgt bzw. einzeln oder auch gemeinsam aktiviert werden. Hierzu ist ein Druckluftkanal 44 vorgesehen, der je nach Verfahrensstand der Vorrichtung 39 die Dichtungen 1 bis 3 mit Druckluft versorgt.

Die Gesamtanlage besteht gemäß Fig.1a aus dem zylinderförmigen oder mehreckförmigen Gehäuse 8 mit der zylindrischen äußeren Wand 9 an der seitlich ein Auslassstutzen 6 zum Entsorgen des Behältersacks 4 oder Folienschlauchs 7 vorgesehen ist. Der Auslassstutzen 6 ist seitlich schrägverlaufend an das Gehäuse 8 angeschlossen, in dem ein Folienschlauch 7 gemäß Fig. 2 aufgenommen ist und wie nachstehend beschrieben entnommen werden kann.

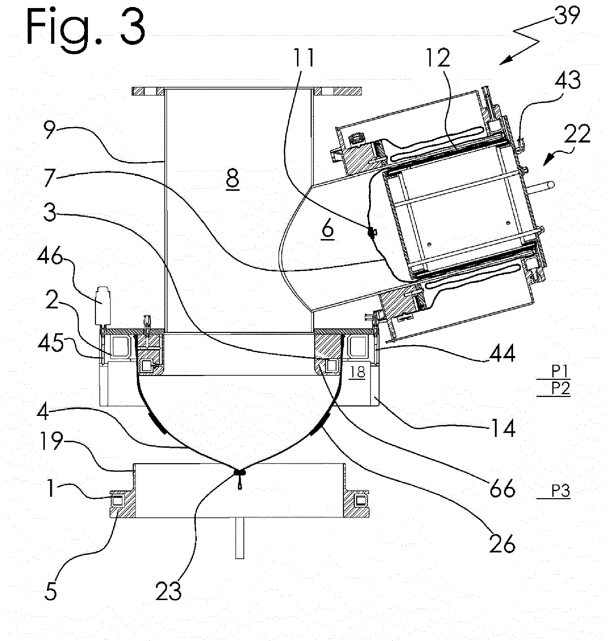

Die äußere oder erste Dichtung 1 und die innere oder dritte Dichtung 3 werden entlastet (Fig. 3) und der Deckel 5 wird auf die unterste Position P3 abgesenkt, wobei die Enden des schlauchförmigen Behältersacks 4 mit Hilfe von Klebestreifen 26 am Behältersack fixiert werden und die mittlere Dichtung 2 aktiviert bleibt und den Behältersack hält.

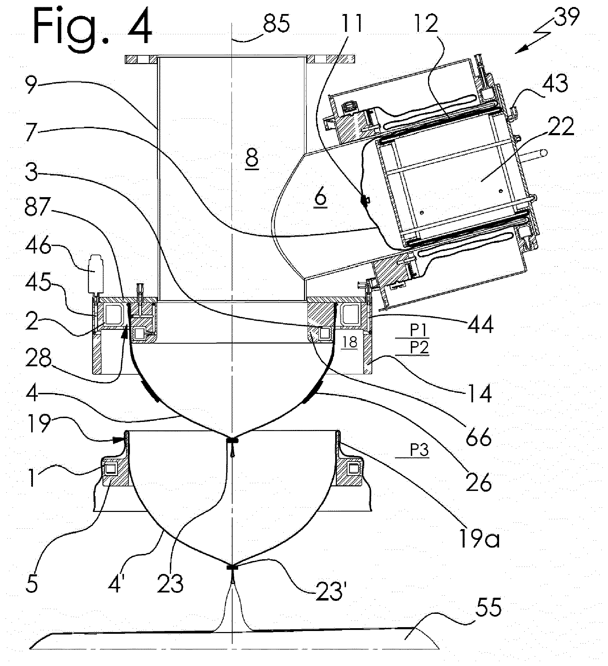

Gemäß Fig. 4 ist der schlauchförmige Behältersack oder Einfüllstutzen 4 immer noch mit Hilfe der mittleren Dichtung 2 gehalten und abgedichtet, wobei ein neuer schlauchförmiger Behältersack 4' auf den abgesenkten Deckel 5 gezogen ist, der am unteren Ende mit Hilfe eines Verschlusses 23 abgedichtet ist, an den sich ein noch zu befüllender Behältersack 55 anschließt.

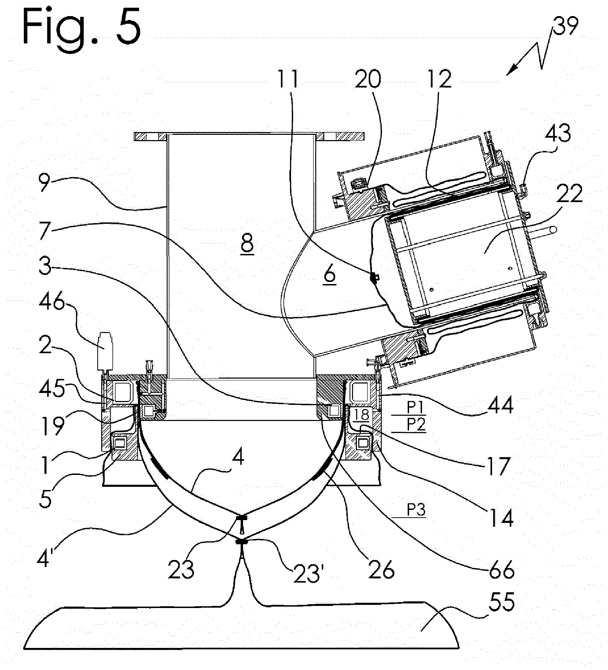

Der Deckel 5 (Fig. 5) ist nun auf die mittlere Position P2 angehoben und die äußere Dichtung 1 wird aktiviert, wobei die mittlere Dichtung 2 aktiviert bleibt und den ersten schlauchförmigen Behältersack 4 hält, hierzu kann der Steg 19 mit dem herumgeführten oberen Ende des neuen schlauchförmigen Behältersacks 4' in die Nut 28 eingeführt werden und wird dann durch die Dichtungen 1-3 abgedichtet, die mit Hilfe einer in der Zeichnung nicht dargestellten pneumatischen Anlage mit Druckluft versorgt werden.

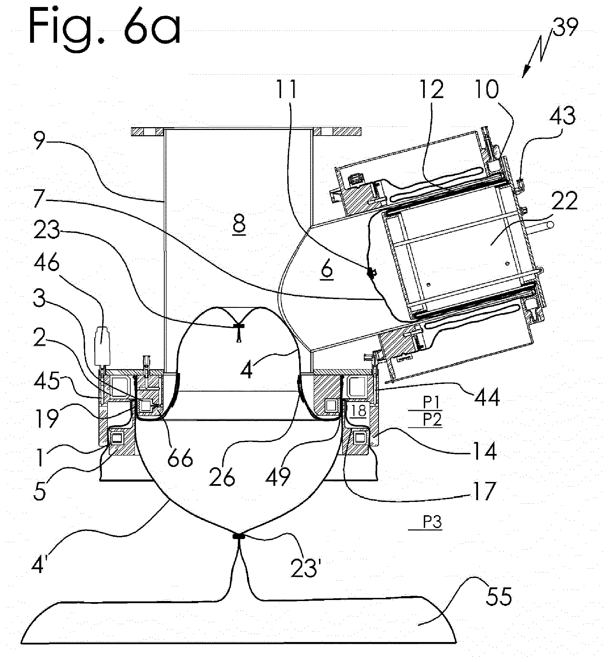

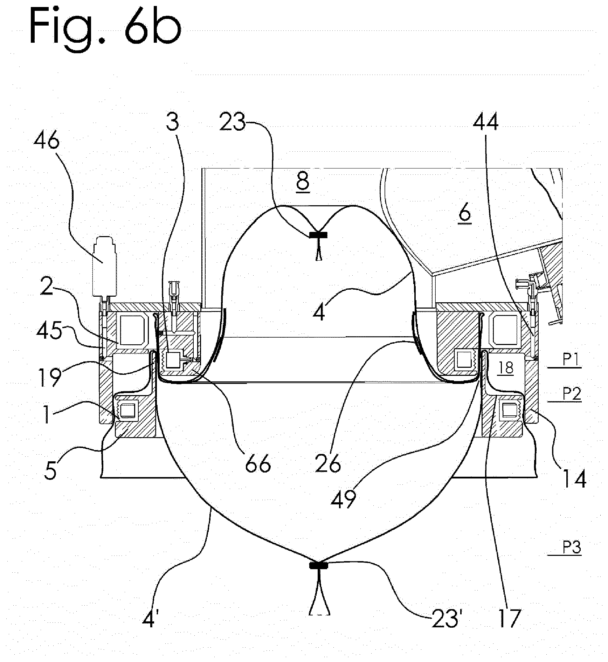

In Fig. 6 ist der Deckel auf die mittlere Position P2 angehoben und die äußere oder erste Dichtung 1 ist aktiviert, wobei die mittlere oder zweite Dichtung aktiviert bleibt und dadurch den ersten schlauchförmigen Behältersack 4 hält.

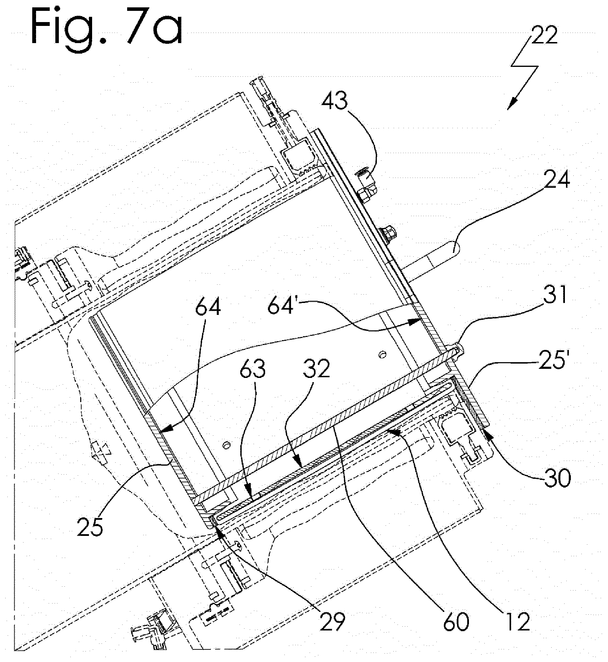

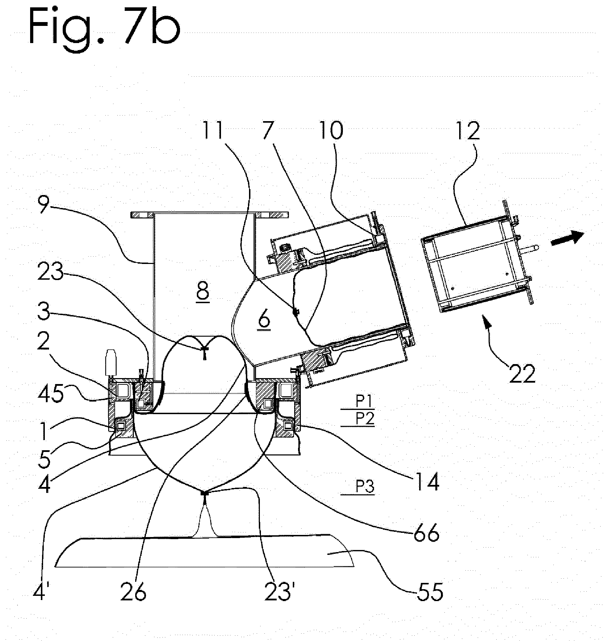

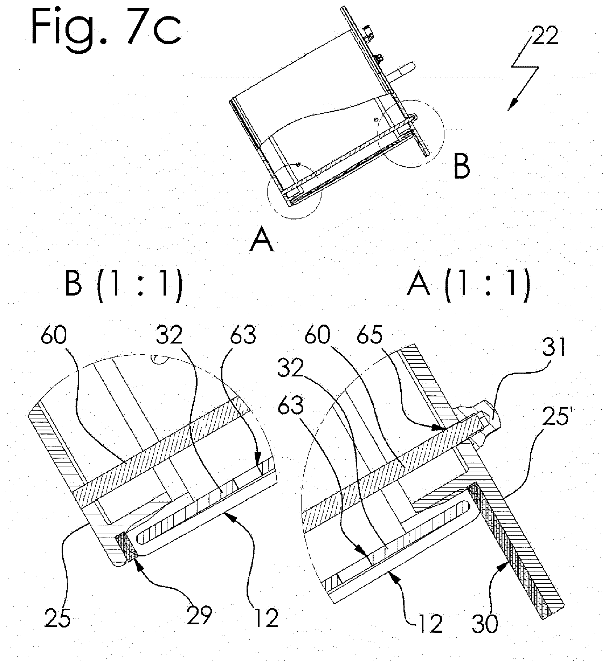

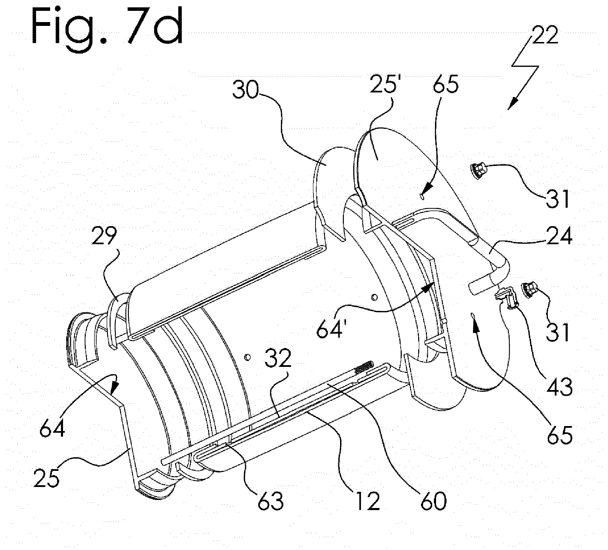

Fig. 6b zeigt einen Ausschnitt aus Fig. 6a mit den Dichtunten 1 bis 3 in einem vergrößerten Maßstab. Die vorteilhafte Anordnung der drei Dichtungen 1 bis 3 erleichtern den Entsorgungsvorgang des entleerten Behältersacks 4 mit Hilfe des Folienschlauchs 7 (Fig. 7) über den Auslassstutzen 6, wie nachstehend noch erläutert. Hierzu ist der Behältersack 4 nach oben in den Bereich der Einlassöffnung des Auslassstutzens gezogen. Der neue Behältersack 4' ist an den Deckel 5 angeschlossen und mit Hilfe des Verschlusses 23'abgedichtet

In den Figuren 7a bis 23 wird der Entsorgungsvorgang des entleerten Behältersacks 4 über den Auslassstutzen 6 veranschaulicht.

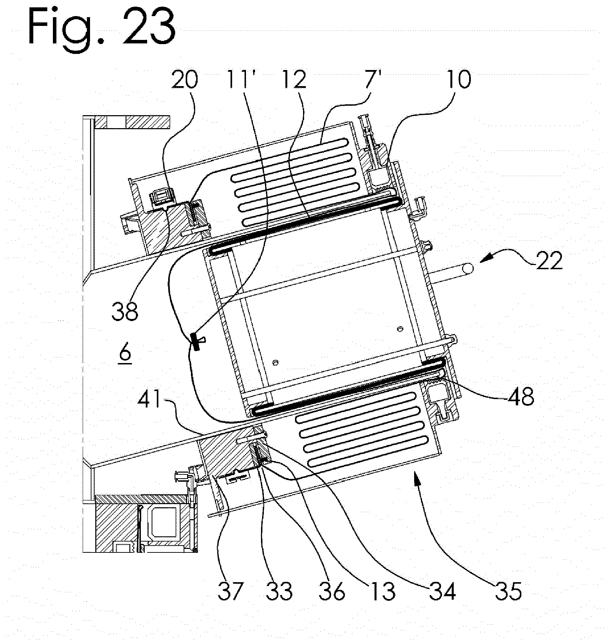

Der Auslassstutzen 6 besteht (Fig. 7a) aus einem rohrförmigen Gehäuse, das seitlich an einer Anschlussöffnung im Gehäuse 8 vorgesehen ist und mit dieser Anschlussöffnung fest verbunden ist. Auf den Auslassstutzen 6 ist, wie nachstehend erläutert, der Folienschlauch (Fig. 23) mäanderartig verschlungen auf den Außenumfang des Auslassstutzens 6 aufgezogen und abgelegt und an seinen beiden Enden mit Hilfe von Dichtungen 29-31 abgedichtet.

In Fig. 7a ist ferner eine Darstellung eines Stutzenverschlusses 22 mit einem Druckluftanschluss 43 dargestellt, der dazu dient den Dichtungszustand der Dichtungen mit den entleerten Behältersack 4 zu überwachen und diesen kontaminationsfrei über den Auslaßstutzen 6 zu entsorgen.

Der Stutzenverschluss 22 mit dem Druckluftanschluss 43 ist an den Druckluftkanal 44 angeschlossen (7b), der von einer in der Zeichnung nicht dargestellten Druckluftanlage aktiviert werden kann und der den Dichtungsprozess des Folienschlauchs 7einleitet.

Ferner weist der Stutzenverschluss 22 einen Griff 24 aufweisenden Deckel 25' auf, mit dessen Hilfe der Stutzenverschluss 22 bewegt bzw. gehalten und in den rohrförmigen Auslassstutzen eingesetzt oder herausgenommen werden kann, wie nachstehend beschrieben.

Der Deckel 25' wird mit Hilfe der Dichtung 30 auf ein rohrförmiges Gehäuse 32 des Stutzenverschlusses 22 gesetzt und abgedichtet.

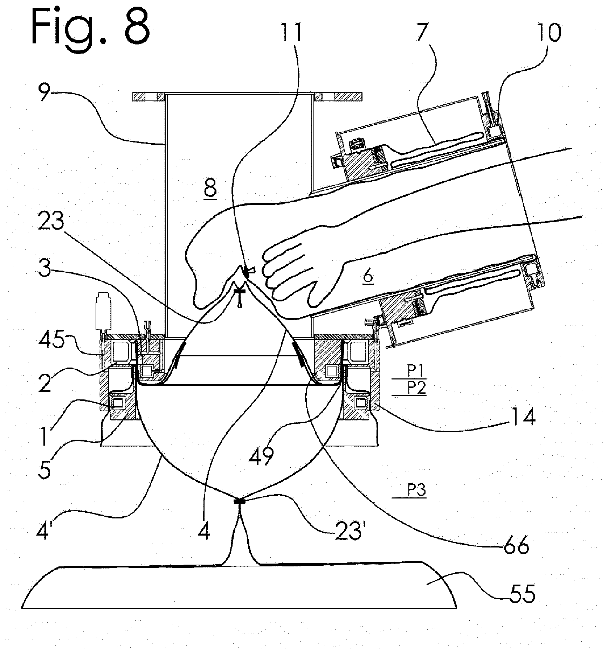

Das Gehäuseteil 32 des Stutzenverschlusses 22 wird am anderen Ende mit Hilfe des Deckels 25' (Fig. 7c) und der ringförmigen plattenförmigen Dichtung 29 abgedichtet, die gegen die Stirnkante eines Gehäuseteils 32' des Stutzenverschlusses 22 anliegt. Das Gehäuseteil 32 des Stutzenverschlusses 22 ist gemäß Fig. 7a in den Auslassstutzen 6 eingesetzt und mit Hilfe der Dichtung 12 abgedichtet (Fig. 7c, 7d, 8).

Die Dichtung 12 ist an beiden Enden an der Wand des Gehäuseteils 32 des Gehäusesteil 32 etwas herumgelegt (Fig. 7C) und liegt somit mit seinen beiden Enden an der Innenseite der Wand des Gehäuseteils 32 und an der Außenseite über die gesamte Länge der Wand des Gehäuseteils 32 an und dichtet somit das Gehäuseteil 32 gegen die Innenseite des Auslassstutzens 6 ab.

Auf diese Weise sind die beiden Enden der Dichtung 12 zwischen der Wand des Gehäuseteils 32 des Stutzenverschlusses 22 und der Innenseite des Auslassstutzens 6 eingeklemmt. Hierdurch ist der Stutzenverschluss 22 im Auslassstutzen 6 abgedichtet.

Die Wand des Gehäuseteils 32 des Stutzenverschlusses 22 ist mit zahlreichen Löchern 63 versehen, durch die Druckluft gelangen kann, sodass sich die Dichtung 12 ausdehnen und gegen eine Innenwand 41 des Auslassstutzens 6 anlegen kann und damit die Dichtwirkung erhöht. Mit Hilfe der Dichtung 12 wird der Folienschlauch 7 im Auslaßstutzen 6 abgedichtet.

Das äußere Ende des Gehäuses 32 wird mit Hilfe einer Gewindestange 60 zusammengehalten, wobei das innere Ende der Gewindestange 60 mit einer Deckel 25 des Gehäuses 32 des Stutzenverschluss 22 verschweißt ist. Das andere Ende der Gewindestange 60 (7c A) erstreckt sich durch eine Öffnung 65 in dem Deckel 25' des Stutzenverschluss 22 und ist mit der Hutmutter 31 versehen, mit deren Hilfe die beiden außen liegenden Enden des Stutzenverschlusses 22 zusammengehalten werden und somit die Deckel 25 und 25' jeweils gegen die beiden Enden des Gehäuseteils 32 des Stutzenverschlusses 22 anliegen und abdichten.

Die Wand des Gehäuseteils 32 des Stutzenverschlusses 22 ist mit zahlreichen Löchern 63 versehen, durch die Druckluft gelangen kann, sodass sich die Dichtung 12 ausdehnen und gegen eine Innenwand 41 des Auslassstutzens 6 anlegen kann und damit die Dichtwirkung erhöht. Mit Hilfe der Dichtung 12 wird der Folienschlauch 7 im Auslassstutzen 6 abgedichtet.

Das äußere Ende des Gehäuseteils 32 wird mit Hilfe einer Gewindestange 60 zusammengehalten, wobei das innere Ende der Gewindestange 60 mit einer Wand Ferner weist der Stutzenverschluss 22 einen Griff 24 aufweisenden Deckel 25' auf, mit dessen Hilfe der Stutzenverschluss 22 bewegt bzw. gehalten und in den rohrförmigen Auslassstutzen eingesetzt oder herausgenommen werden kann, wie nachstehend beschrieben.

Der Deckel 25' wird mit Hilfe der Dichtung 30 auf ein rohrförmiges Gehäuse 32 des Stutzenverschlusses 22 gesetzt und abgedichtet.

Das Gehäuseteil 32 des Stutzenverschlusses 22 wird am anderen Ende mit Hilfe des Deckels 25' (Fig. 7c) und der ringförmigen plattenförmigen Dichtung 29 abgedichtet, die gegen die Stirnkante eines Gehäuseteils 32' des Stutzenverschlusses 22 anliegt. Das Gehäuseteil 32 des Stutzenverschlusses 22 ist gemäß Fig. 7a in den Auslassstutzen 6 eingesetzt und mit Hilfe der Dichtung 12 abgedichtet (Fig. 7c, 7d, 8).

Die Dichtung 12 ist an beiden Enden an der Wand des Gehäuseteils 32 des Gehäusesteil 32 etwas herumgelegt (Fig. 7C) und liegt somit mit seinen beiden Enden an der Innenseite der Wand des Gehäuseteils 32 und an der Außenseite über die gesamte Länge der Wand des Gehäuseteils 32 an und dichtet somit das Gehäuseteil 32 gegen die Innenseite des Auslassstutzens 6 ab.

Auf diese Weise sind die beiden Enden der Dichtung 12 zwischen der Wand des Gehäuseteils 32 des Stutzenverschlusses 22 und der Innenseite des Auslassstutzens 6 eingeklemmt. Hierdurch ist der Stutzenverschluss 22 im Auslassstutzen 6 abgedichtet.

Die Wand des Gehäuseteils 32 des Stutzenverschlusses 22 ist mit zahlreichen Löchern 63 versehen, durch die Druckluft gelangen kann, sodass sich die Dichtung 12 ausdehnen und gegen eine Innenwand 41 des Auslassstutzens 6 anlegen kann und damit die Dichtwirkung erhöht. Mit Hilfe der Dichtung 12 wird der Folienschlauch 7 im Auslaßstutzen 6 abgedichtet.

Das äußere Ende des Gehäuses 32 wird mit Hilfe einer Gewindestange 60 zusammengehalten, wobei das innere Ende der Gewindestange 60 mit einem Deckel 25 des Gehäuseteils 32 des Stutzenverschluss 22 verschweißt ist. Das andere Ende der Gewindestange 60 (7c A) erstreckt sich durch eine Öffnung 65 in dem Deckel 25' des Stutzenverschluss 22 und ist mit der Hutmutter 31 versehen, mit deren Hilfe die beiden außen liegenden Enden des Stutzenverschlusses 22 zusammengehalten werden und somit die Deckel 25 und 25' jeweils gegen die beiden Enden des Gehäuseteils 32 des Stutzenverschlusses 22 anliegen und abdichten. Zwei weitere in der Zeichnung nicht dargestellte Gewindestangen 60 (7c A) sind zusätzlich vorgesehen, die mit gleichem Abstand zueinander angeordnet sind, um einen gleichmäßigen Anpressdruck und somit eine gute Dichtwirkung an den Enden des Gehäuseteils 32zu erzeugen.

Gemäß Fig. 7b ist die vierte Dichtung 10 und die fünfte Dichtung 12 entlastet, wobei der Stutzenverschluss 22 aus dem Auslassstutzen 6 entnommen ist.

Gemäß Fig. 8 greift der Bediener mit der Hand in den Auslassstutzen 6 und ist dabei durch den Folienschlauch 7 vor Kontamination geschützt. Dabei ergreift er den vorherigen schlauchförmigen entleerten Behältersack 4, um ihn in den Folienschlauch 7 zu ziehen.

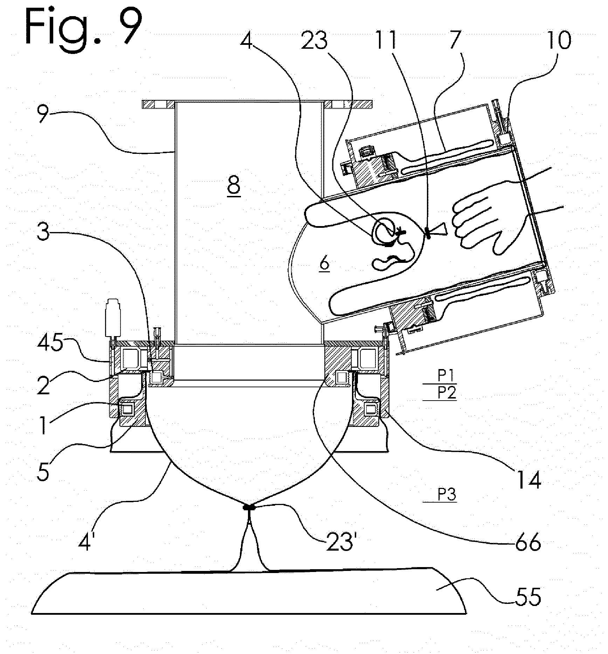

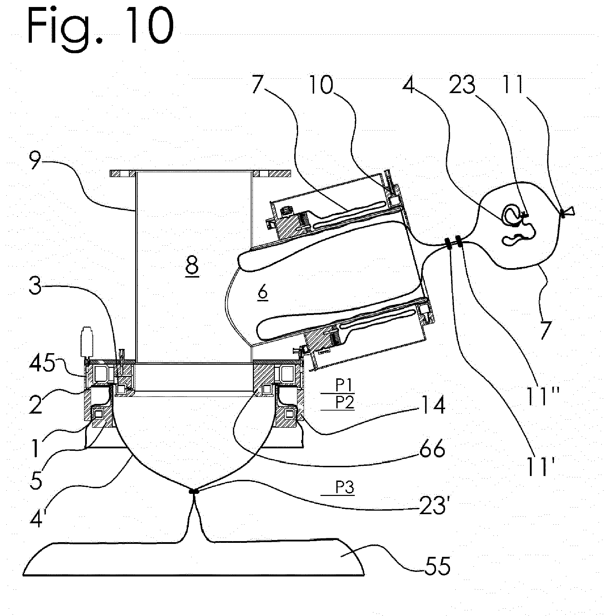

Fig. 9 zeigt, dass der entleerte schlauchförmige Einfüllstutzen 4 durch den Folienschlauch 7 und den Auslassstutzen 6 nach außen gezogen werden kann und dadurch kontaminationsfrei (Fig 10) im noch abzutrennenden Folienschlauch 7 entsorgt werden kann. Der im Auslassstutzen 6 verbleibende abgetrennte Folienschlauch 7 ist durch einen ersten Verschluss 11 abgedichtet und der aus dem Auslassstutzen 6 herausgeführte Folienschlauch 7 mit dem eingeschlossenen Behältersack 4 mit Hilfe eines zweiten 11' und dritten Verschlusses 11" nach außen vollständig abgedichtet und kann nun mit dem eingeschlossenen Folienschlauch 4 kontaminationsfrei entsorgt werden

Gemäß Fig. 10 ist der Folienschlauch 7 mit dem darin enthaltenen entleerten schlauchförmigen Behältersack 4 mit den beiden Verschlüssen 11` und 11" abgebunden, wobei anschließend das Ende des Folienschlauchs 7 mit dem darin eingeschlossenen schlauchförmigen Behältersack 4 zwischen diesen beiden Verschlüssen 11' und 11" abgetrennt ist.

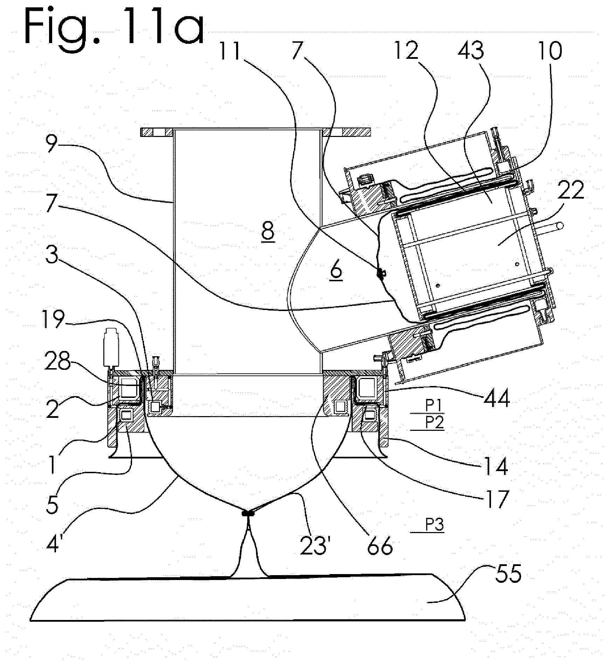

Gemäß Fig.11a ist der Stutzenverschluss 22 wieder in den Auslassstutzen 6 eingesetzt, wobei die fünfte Dichtung 12 und die vierte Dichtung 10 druckbeaufschlagt und der Stutzenverschluss abgedichtet bleibt. Die Dichtung 10 wird über eine Druckluftleitung 89 mit Druckluft versorgt. Der Deckel 5 ist in die höchste Position P1 angehoben. Die äußere Dichtung 1 ist mit dem erforderlichen Druck beaufschlagt, sodass der schlauchförmige Einfüllstutzen mit dem Behältersack 4' dicht abgeschlossen ist und gleichzeitig den Deckelhub des Deckel 5 in die höchste Position P1 zulässt.

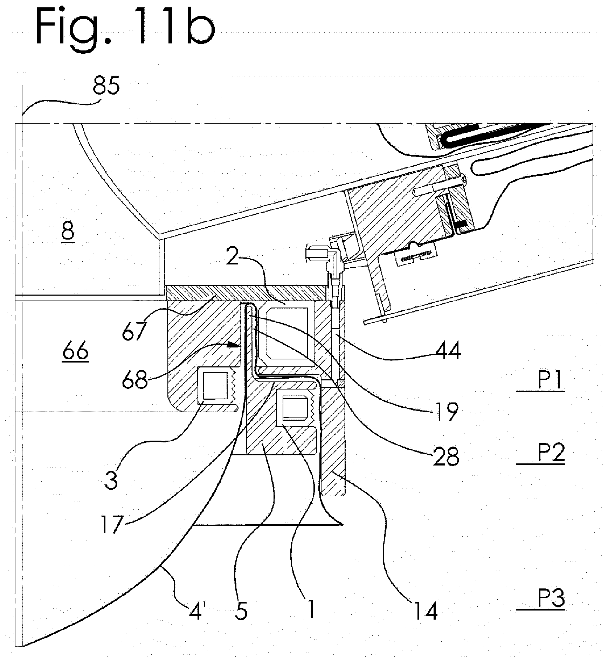

Fig.11b zeigt den Deckel 5 mit den drei Dichtungen 1 bis 3 in einem vergrößerten Maßstab. Der Steg 19 des Deckels 5 drückt den schlauchförmigen Einfüllstutzen 4' in die Nut 28. Die Nut 28 wird durch eine äußere Wand 68 des Gehäuseteils 66 und der zweiten mit Bezug auf die Standfläche der Vorrichtung 39 nach oben versetzten und außenliegenden Dichtung 2 gebildet, in die der Steg 19 mit Hilfe eines in der Zeichnung nicht dargestellten Stellzylinders eingeschoben ist. Die dritte Dichtung 3 hat einen Außendurchmesser, der etwas kleiner ist als der Innendurchmesser der zweiten Dichtung 2. Der Folienschlauch des Behältersacks 4' ist in dieser Stellung (Fig.11) um den Steg 19 herumgeführt und dann durch den Zwischenraum der sich gegenüberliegenden Dichtungen 1 und 2 geführt. Die beiden Dichtungen 10 und 12 sind weiter nicht druckbeaufschlagt, jedoch die Dichtung 1, sodass das im Spalt 28 aufgenommene Ende des Behältersacks 4' eingeklemmt bleibt und abgedichtet ist. Die zweite Dichtung 2 und die dritte Dichtung 3 sind noch nicht aktiviert.

Das am Gehäuse 8 vorgesehene Gehäuseteil 66 ist mit einem Flansch 67 verbunden. Der sich nach unten erstreckende zylinderförmige Stutzen 14 ist ebenfalls an den Flansch 67 angeschlossen und umschließt die beiden Dichtungen 1 und 2.

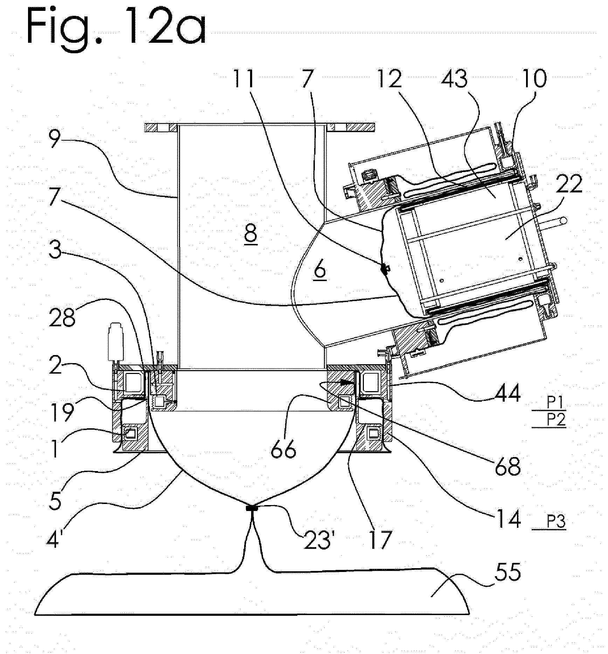

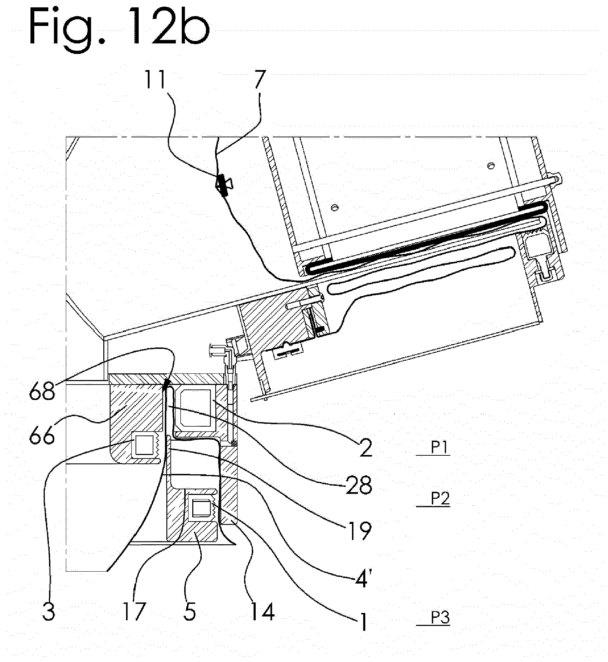

Gemäß Fig.12a und 12b ist der Deckel 5 auf die mittlere Position P2 abgesenkt, wobei die äußere Dichtung 1 weiterhin mit dem erforderlichen Druck über die in der Zeichnung nicht dargestellte Druckluftleitung beaufschlagt ist, sodass der schlauchförmige Einfüllstutzen 4' abgedichtet ist und dadurch den Hub des Deckels 5 auf die mittlere Position P2 zulässt. Die Dichtung 2 wird nun ebenfalls mit Druck beaufschlagt, sodass der Folienschlauch 4' in der Nut 28 eingeklemmt bleibt und abdichtet wird. Hierdurch wird auch die Dichtung 2 gegen die äußere Wand 68 des Gehäuseteils 66 gedrückt und dabei der Folienschlauch 4' eingeklemmt. Hierdurch ist das schlauchförmige Anschlusselement 4` nach außen hin abgedichtet.

Der Steg 19 (Fig.12b) des Deckels 5 kann nun aus der Nut 28 nach unten herausgezogen und die Dichtung mit einem definierten Druck aktiviert werden. Nachdem der Deckel 5 die mittlere Position P2 erreicht hat, kann die mittlere Dichtung 2 und die Dichtungen 1 und 3, mit vollem Druck beaufschlagt werden, sodass der schlauchförmige Anschlussstutzen 4' abgedichtet ist.

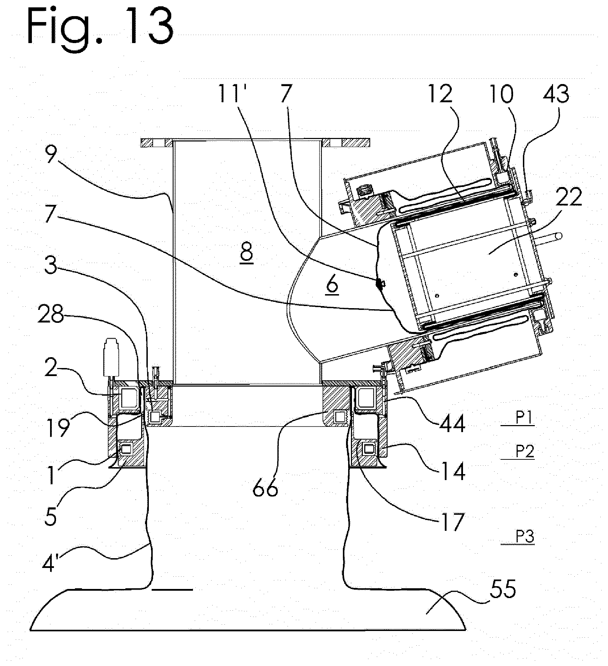

Gemäß Fig.13 ist das schlauchförmige Anschlusselement 4`aufgebunden und der daran angeschlossene Behältersack 55 kann befüllt werden, wobei alle Dichtungen 1, 2 und 3 mit dem vollen Druck aktiviert bleiben.

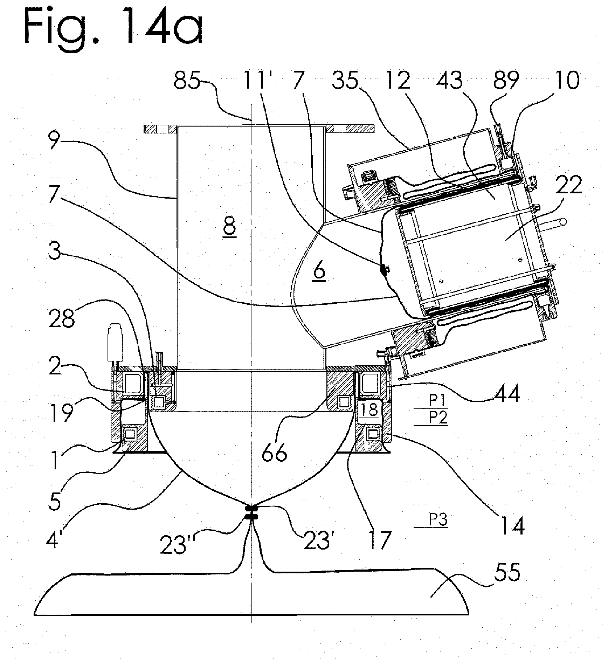

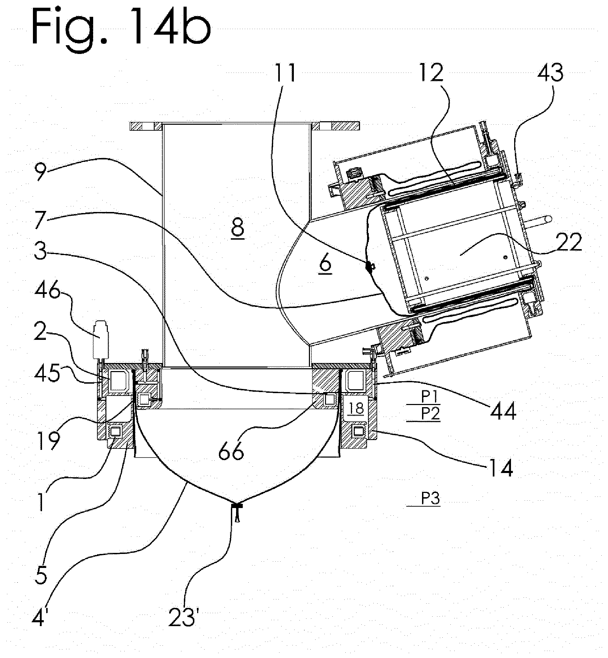

Aus Fig. 14a ist erkenntlich, dass nach der Befüllung des Behältersacks 55 das schlauchförmige Anschlusselement 4' und der Behältersacks 55 mit zwei Verschlüssen 23' und 23" abgebunden werden und der Behältersacks 55 nun kontaminationsfrei entfernt werden kann. Hierzu wird der schlauchförmige Einfüllstutzen 4' und Behältersacks 55 (Fig. 14b) zwischen diesen Verschlüssen 23' und 23" abgetrennt. Bei diesem Verfahrensschritt sind alle Dichtungen 1, 2 und 3 mit vollem Druck aktiviert. Diese Stellung entspricht der bereits beschriebenen Ausgangssituation und der nächste Entleervorgang kann in der gleichen Reihenfolge wie zuvor beschrieben stattfinden.

In den Figuren ab 15a bis Figur 23 ist die kontaminationsfreie Entsorgung des schlauchförmigen Anschlusselements oder Behältersacks 4 beschrieben.

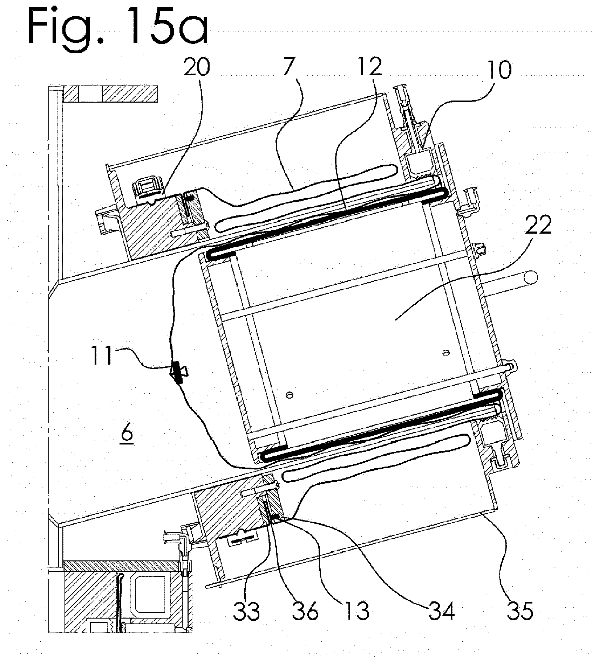

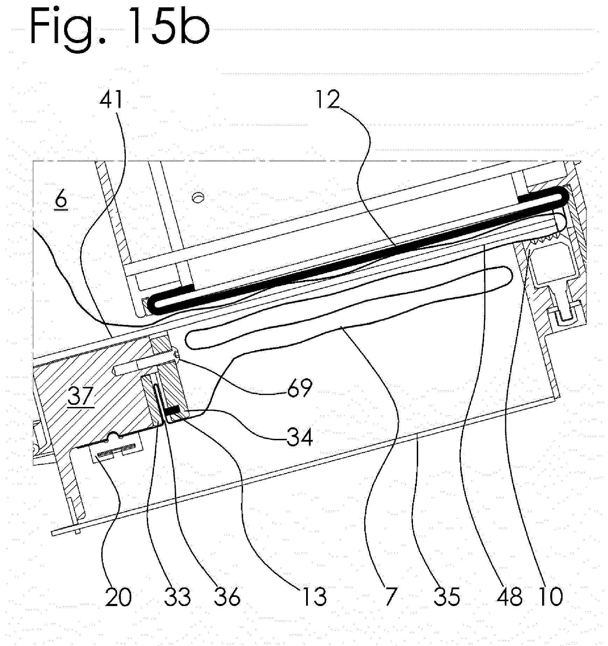

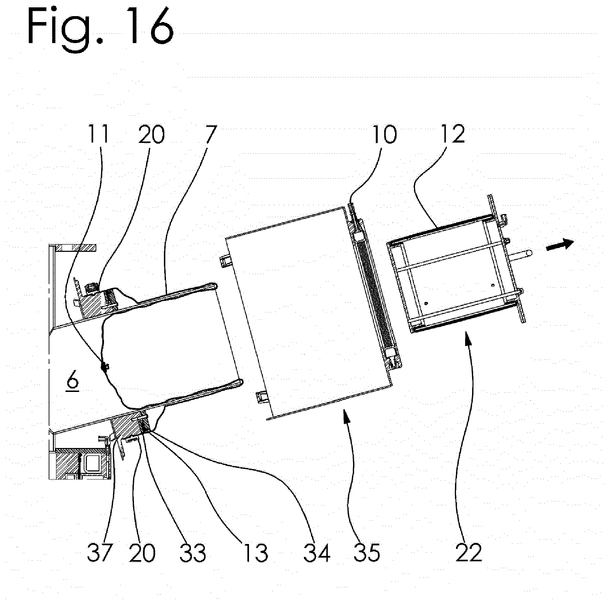

Wie aus Fig. 15a und Figur 16 hervorgeht, wird bei jedem Befüllvorgang ein Stück des Folienschlauchs 7 verbraucht, der auf dem Auslassstutzen 6 axial und mäanderförmig gefaltet und aufgebracht ist, so dass eine Länge von mehreren Metern erreicht werden kann. Die Verbrauchsmenge bei einem Befüllvorgang beträgt zum Beispiel 0,4 m, sodass bei einer Gesamtlänge des Folienschlauchs von 7,2 m ca. 18 Füllungen möglich sind.

Gemäß 15b ist der der Stutzenverschluss 22 wieder im Auslassstutzen 6 aufgenommen und der auf dem Auslassstutzen 6 aufgezogene Folienschlauch 7 ist in einer umlaufenden Nut 36 eingeklemmt und abgedichtet, die zwischen einem beweglichen Ring 33 und einem Gegenhalter 34 gebildet wird. Die Klemmwirkung wird dadurch erreicht, dass der bewegliche Ring 33 gegen eine Dichtung 13 gepresst ist, die zwischen dem beweglichen Ring 33 und dem Gegenhalter 34 in der Nut 36 des Gegenhalters 34 vorgesehen ist. Der Gegenhalter 34 ist an einem Stutzenabsatz 37 mit Hilfe von Schrauben 69 befestigt und am Auslassstutzen 6a angeschweißt. Die Klemmwirkung des Folienschlauchs 7 wird mit Hilfe der Dichtung 13 ermöglicht, die in einer im Gegenhalter 34 vorgesehenen Nut 36 aufgenommen ist. Die Klemmwirkung und somit die Befestigung und Abdichtung des Folienschlauchs 7 wird mit Hilfe der Dichtung 13 erreicht, wobei die Anpresskraft des beweglichen Rings 33 auf unterschiedliche Weise, wie in verschiedenen Ausführungsbeispielen nachfolgend beschrieben, erfolgen kann.

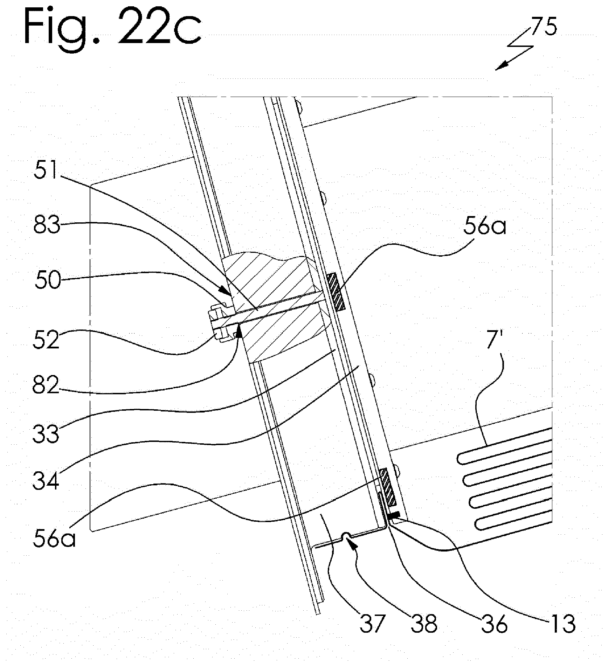

Eine entsprechende Klemmvorrichtung kann mit oder ohne Hilfsenergie erzeugt werden, z. B. kann die Klemmvorrichtung mechanisch, magnetisch, pneumatisch, betätigt werden, wie das in den Figuren 22c bis 22i erläutert ist.

Um einen neuen Folienschlauch 7 über den feststehenden am Gehäuse 8 befestigen Auslassstutzen 6 zu stülpen, müssen die Dichtungen 10 und 12 entlastet werden und der Stutzenverschluss 22 und ein Gehäuse 35 entfernt werden (Figur 16).

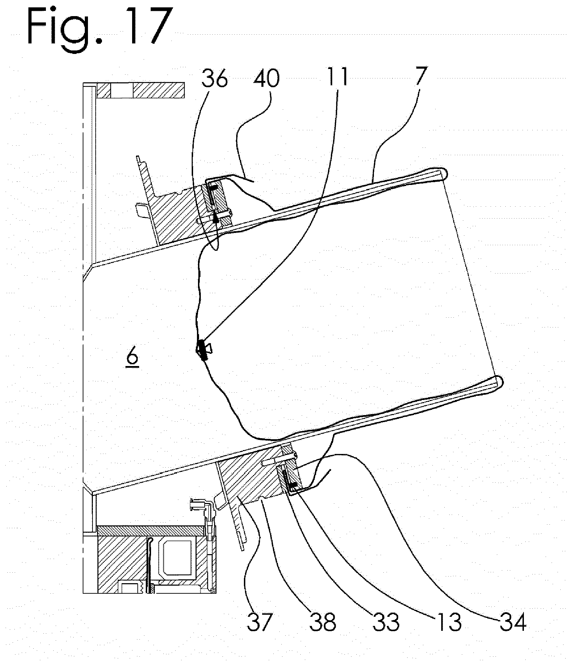

Nach Fig. 17 ist ein Ende 40 des Folienschlauchs 7 am Außenumfang des Auslassstutzens 6 nach vorne gefaltet, und der Folienschlauch 7 ist mit Hilfe des Gegenhalters 34 und der Dichtung 13 in der Nut 36 zwischen dem beweglichen Ring 33 und dem Gegenhalter 34 eingeklemmt. Der Folienschlauch 7 ist hierdurch abgedichtet und gesichert.

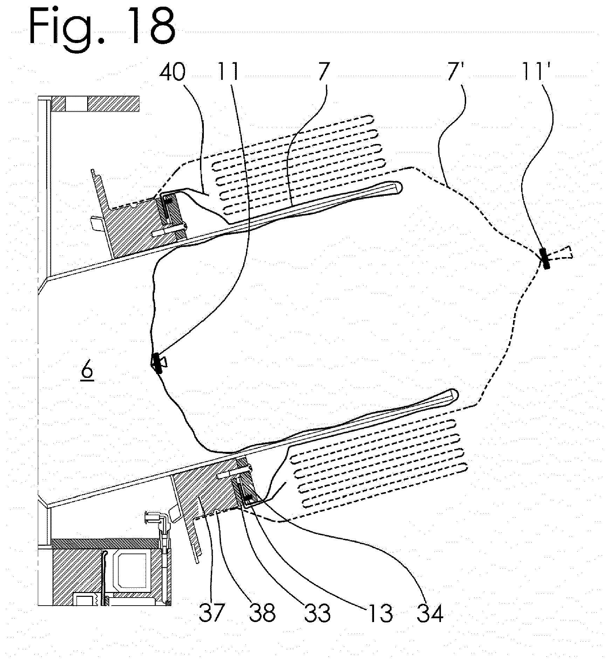

Gemäß Fig. 18 ist ein neuer Folienschlauch 7` über den Rest des Folienschlauchs 7 gestülpt und auf den Stutzenabsatz 37 gezogen, wobei das Ende des neuen Folienschlauchs 7 mit dem Verschluss 11' verschlossen ist.

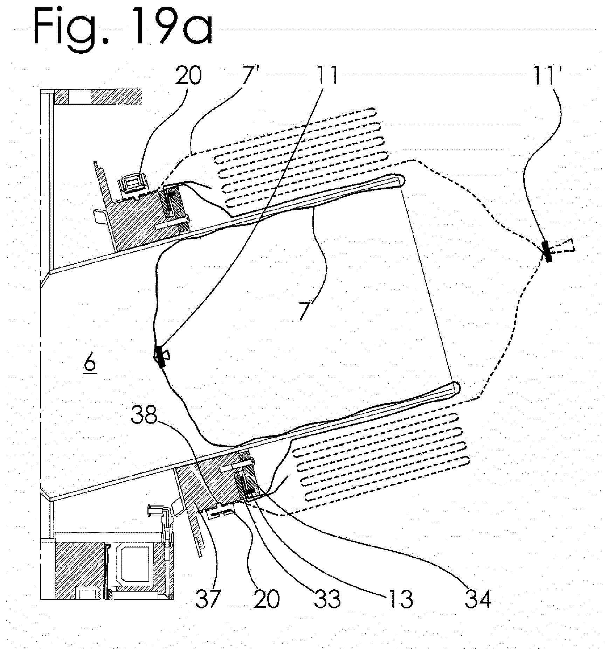

Wie Fig. 19a zeigt, ist der neue Folienschlauch 7' mit Hilfe eines Spannelements 20 auf dem Stutzenabsatz 37 fixiert und abgedichtet. Hierzu wird das Ende des Folienschlauchs 7' im Spannelement 20 eingeklemmt.

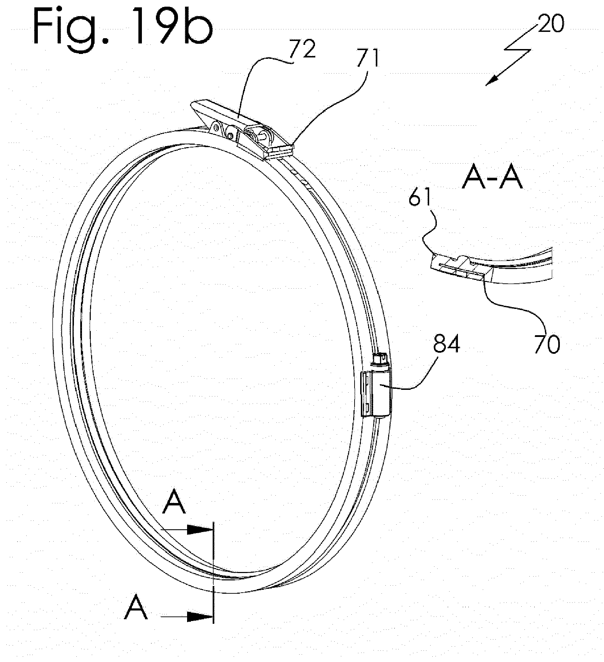

Wie aus Figur 19b hervorgeht, besteht das Spannelement 20 aus einem Metallband 70 mit einem Haken 71 in dem ein Kniehebelverschluss 72 eingreift und gespannt wird, sodass der Folienschlauch 7' mit Hilfe des Spannelements 20 eingeklemmt und abgedichtet wird. Eine C-förmige Profildichtung 61 mit dem eingelassenen Metallband 70 dient zur Verstärkung einer Nut 38. Der Durchmesser des Spannelements 20, das als Spannring ausgebildet ist, kann mit Hilfe einer Spannvorrichtung 84, die ein Schneckengewinde mit einer Stellschraube aufweist, den Durchmesser des Spannrings verändern und den Anpressdruck auf den Auslassstutzen 6 erhöhen oder verringern, wenn hierzu die Stellschraube betätigt wird.

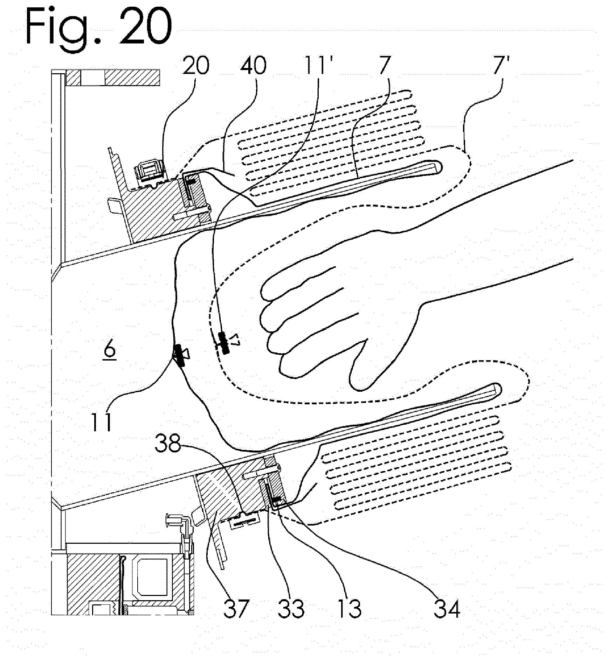

Gemäß Fig. 20 greift ein Bediener mit der Hand in den Auslassstutzen 6 und zieht mit Hilfe des Folienschlauchs 7' den vorherigen bzw. alten Folienschlauch 7 kontaminationsfrei aus dem Auslassstutzen 6 heraus.

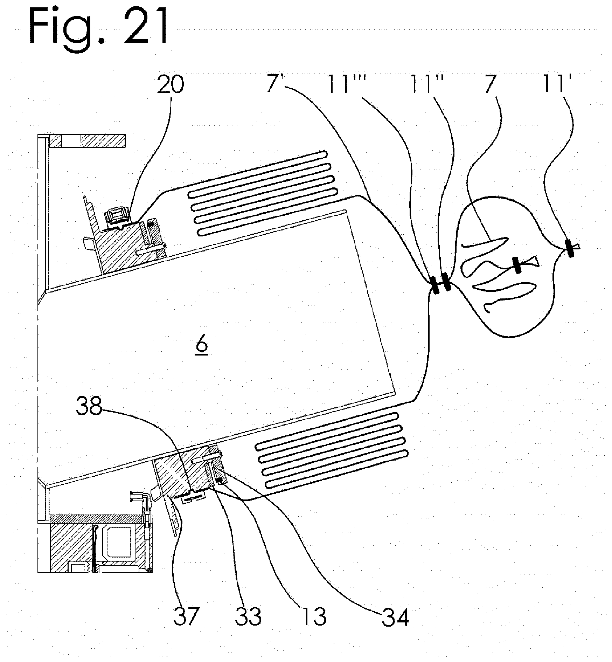

In Fig. 21 ist der Folienschlauch 7 in dem Folienschlauch 7'vollständig aufgenommen und mit zwei Verschlüssen 11' und 11" abgebunden. Jetzt kann das außerhalb des Auslassstutzens 6 liegende Ende des Folienschlauchs 7' mit dem darin eingeschlossenen vorherigen Folienschlauch 7 zwischen den beiden Verschlüssen 11' von dem im Auslassstutzen 6 verbleibenden Teil des Folienschlauchs 7' abgetrennt und entsorgt werden.

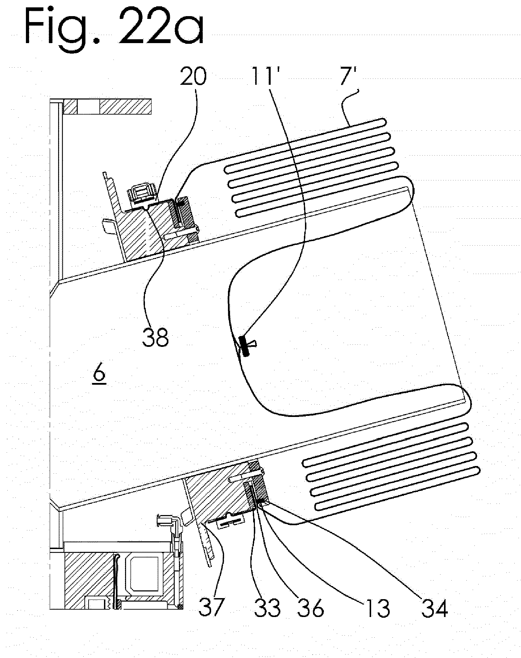

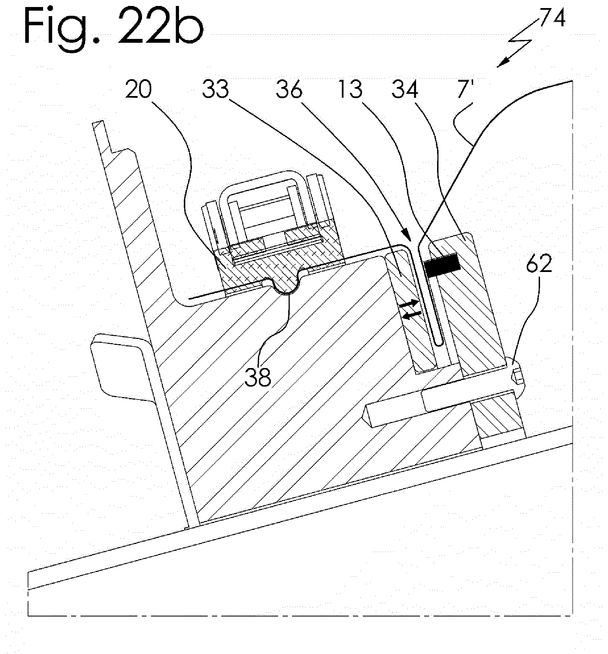

Gemäß Fig. 22a kann mit einem Hilfsmittel, wie einem Seil oder einer Schablone der neue Folienschlauch 7' in die umlaufende Nut 36 nach innen in Richtung des Außenumfangs des Auslassstutzens 6 gedrückt werden, wobei anschließend der Folienschlauch 7' mit dem beweglichen Ring 33 (Figur 22b) gegen die Dichtung 13 gedrückt und mit Hilfe einer Andrückvorrichtung 38 fixiert und abgedichtet wird. Nun kann anschließend das andere Ende des Folienschlauchs 7` wieder in den Auslassstutzen 6 eingebracht und mittels des Verschlusses 11' abgedichtet werden.

In einem ersten Ausführungsbeispiel der Klemm- und Abdichtvorrichtung Fig. 22b ist die Klemm- und Abdichtvorrichtung mit dem Spannelement 20 in größerem Maßstab dargestellt. Der bewegliche Ring 33 klemmt gemäß dem oberen Pfeil das vordere bzw. zweite Ende des Folienschlauchs 7' gegen die Dichtung 13 in der Nut 36, die in dem Gegenhalter 34 aufgenommen ist. Der Gegenhalter 34 ist mit Hilfe eines oder mehrerer Schraubenbolzen 62 im Stutzenabsatz 37 gesichert. Der Stutzenabsatz 37 ist gemäß Figur 1a und 22b mit dem Auslassstutzen 6 fest verbunden bzw. verschweißt.

Gemäß einem zweiten Ausführungsbeispiel Fig. 22c, das in einer vergrösserten Darstellung von der Figur 22a dargestellt ist, ist eine andere Klemm- und Abdichtvorrichtung 75 dargestellt. Der bewegliche Ring 33 (22b) wird mit Hilfe von mehreren Magneten 56a gegen den Gegenhalter 34 gezogen. Zum Lösen der Klemm- und Abdichtvorrichtung sind mehrere Gewindespindeln 51 am Beweglichen Ring 33 fest angeschlossen. Die Gewindespindeln 51 erstrecken sich durch Bohrungen 82 im Stutzenabsatz 37 und stehen an einer hinteren Fläche 83 des Stutzenabsatzes 37 hervor, sodass auf das freie Ende der Gewindespindel 51 eine Gewindemutter 50 aufgeschraubt werden kann. Durch Anziehen der Gewindemutter 50 wird der bewegliche Ring 33 von den Magneten 56a entfernt, sodass der Folienschlauch 7' in die Nut 36 eingeführt oder aus der Nut 36 herausgeführt werden kann.

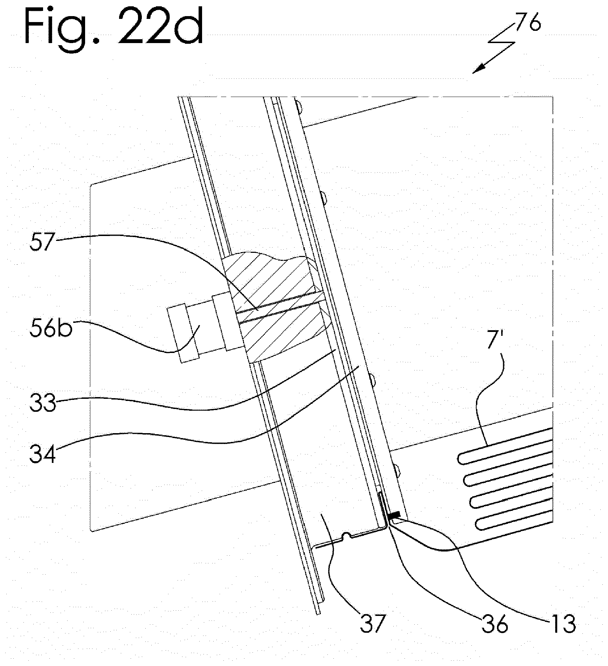

Mit Hilfe eines Pneumatik- oder Elektrozylinders 56b (Fig. 22d) wird die Hubbewegung des beweglichen Rings 33 mit Hilfe einer Kolbenstange 57 erzeugt, die einen Ends an den beweglichen Ring 33 und anderen Ends an den Pneumatik- oder Elektrozylinder angeschlossen ist. Mit Hilfe der Hubbewegung der Kolbenstange 57 kann der bewegliche Ring 33 verstellt werden und somit die Nut 36 geöffnet oder geschlossen werden.

In den nachfolgenden Beispielen 22e bis 22i wird durch unterschiedlich ausgebildete Stellvorrichtungen die Öffnung oder Schließung der Nut 36 dargestellt.

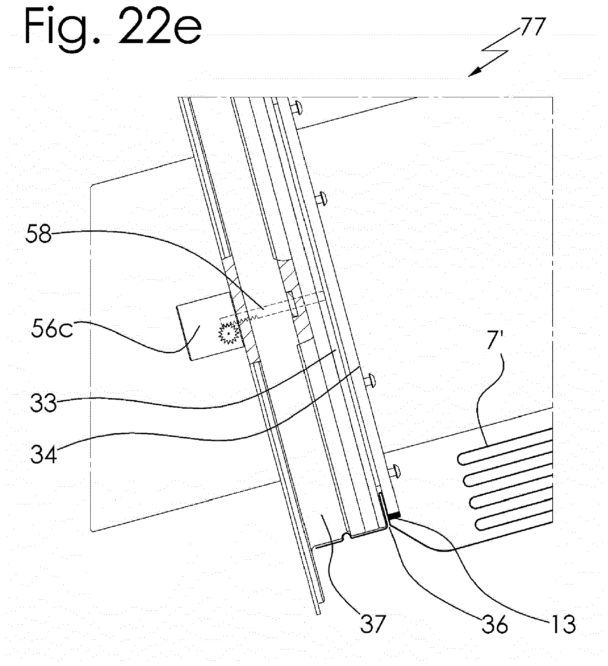

Fig. 22e weist eine Klemm- und Abdichtvorrichtung 77 zum Verstellen einer Zahnstange 58 auf, die mit Hilfe eines Zahnstangengetriebes 56c die Nut 36 öffnet oder schließt.

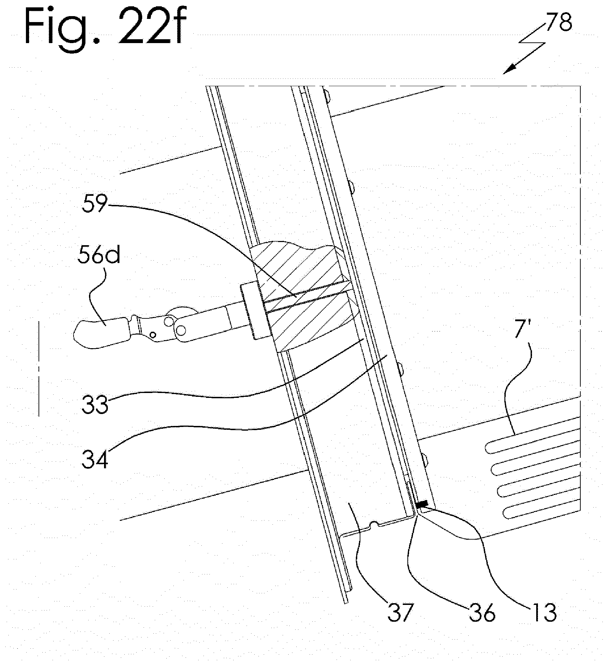

Fig. 22f weist eine Klemm- und Abdichtvorrichtung 78 als Stellvorrichtung einen Kniehebelspanner 56d auf, der über ein Verlängerungsgestänge 59 mit dem beweglichen Ring 33 verbunden ist und auf diese Weise ein Verstellen des beweglichen Rings 33 ermöglicht.

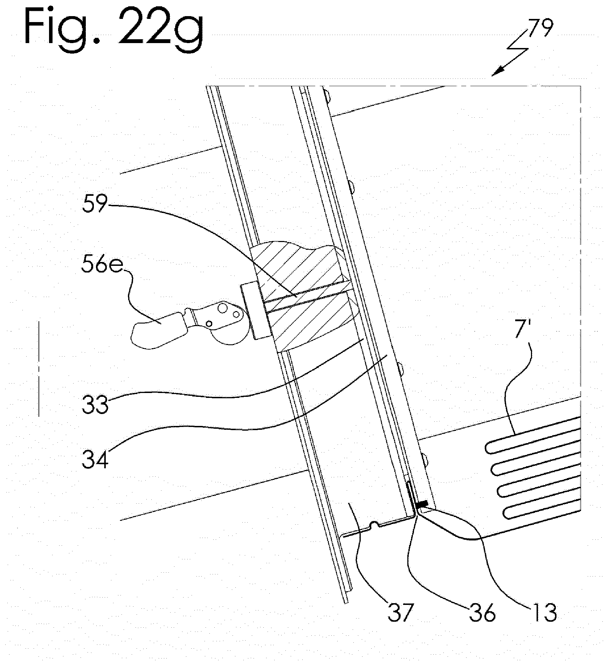

In Fig. 22g weist die Klemm- und Abdichtvorrichtung 79 den Kniehebelspanner 56d auf, mit dessen Hilfe der bewegliche Ring 33 verstellt werden kann.

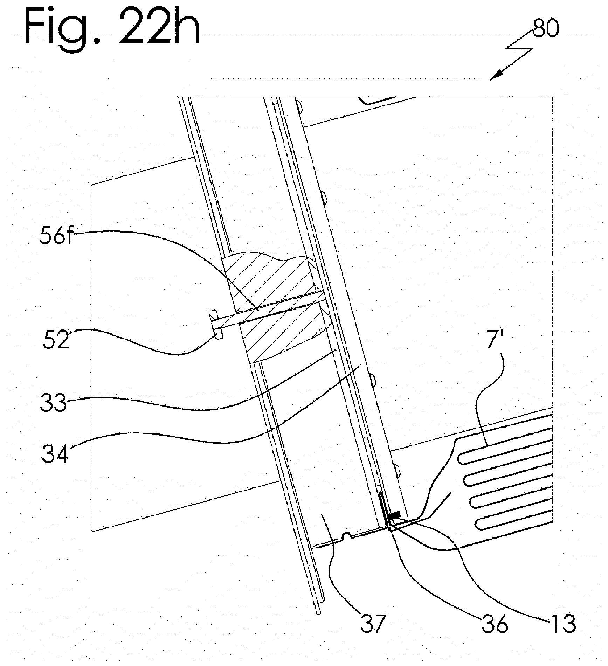

Fig. 22h zeigt eine Klemm- und Abdichtvorrichtung 80, die eine Gewindespindel 56f aufweist, die mit einem Ende mit Hilfe eines drehbaren Lagers, beispielsweise einem Kugellager, drehbar angeschlossen ist. Die Gewindespindel 56f ist mit Hilfe eines im Stutzenabsatz 37 vorgesehenen Gewindes verstellbar, sodass die Nut 36 geöffnet oder geschlossen werden kann.

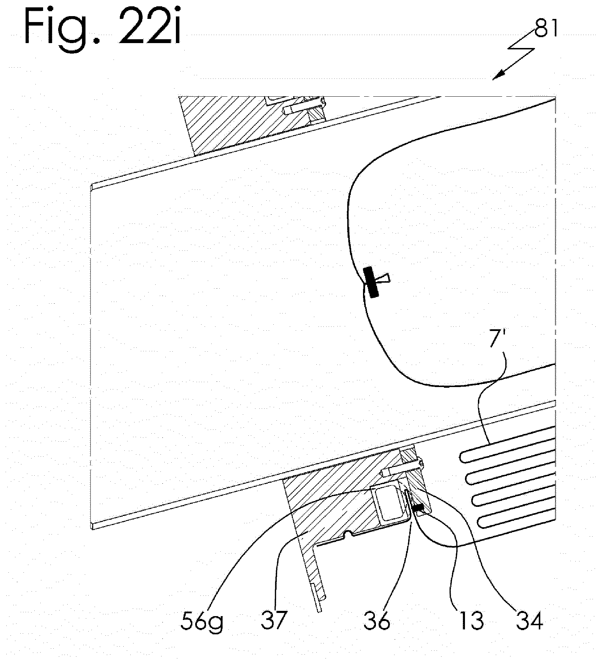

Gemäß Fig. 22i ist eine Klemm- und Abdichtvorrichtung 81 als pneumatische Vorrichtung ausgebildet, zu der ein pneumatischer Dichtring 56g gehört, der mit Hilfe von Druckluft die Nut 36 schließen oder öffnen kann. Die Druckluftversorgung erfolgt über eine in der Zeichnung nicht dargestellte pneumatische Anlage.

Gemäß Fig.16 und 23 ist der neue Folienschlauch 7' auf dem Auslassstutzen 6 und dem Stutzenabsatz 37 aufgebracht. Nun kann zuerst das Gehäuse 35 auf dem Stutzenabsatz 37 montiert und dann der Stutzenverschluss 22 wieder in den Auslassstutzen 6 eingesetzt werden. Anschließend wird die Dichtung 10 und die Dichtung 12 aktiviert, um den Folienschlauch 7' so abzudichten, dass möglichst wenig Staub in den Folienschlauch gelangen kann.

### Bezugszeichenliste

- 1: erste Dichtung, äußere
- 2: zweite Dichtung, mittlere
- 3: dritte Dichtung
- 4: schlauchförmiger Behältersack, Einfüllstutzen
- 4': schlauchförmiger Einfüllstutzen, Behältersack
- 5: Deckel beweglich, Ringköper
- 6: Auslassstutzen
- 7: Folienschlauch
- 7`: Folienschlauch
- 8: Gehäuse, Auffanggehäuse
- 9: Wand des Gehäuses
- 10: vierte Dichtung
- 11: Verschluss
- 11': Verschluss Dichtung 1
- 11": Verschluss Dichtung 1
- 12: fünfte Dichtung
- 13: sechste Dichtung
- 14: äußeres Gehäuseteil, Anschlussteil für Auffanggehäuse
- 15: untere Seite Deckel 5
- 17: Innenseite von Deckel 5
- 18: Raum, leer
- 19: Steg entspricht einem flachen dünnen Baukörper bzw. Ringkörper
- 20: Spannelement
- 21: Raum, leer
- 22: Stutzenverschluss
- 23: Verschluss
- 23`: Verschluss
- 23": Verschluss
- 24: Griff
- 25: Deckel
- 25': Deckel für das Gehäuse des Stutzenverschlusses
- 26: Klebestreifen
- 27: beweglicher Ring, Einfädelring
- 28: Nut oder Spalt
- 29: ringförmige Dichtung für Steg
- 30: ersten ringförmige und plattenförmige Dichtung
- 31: Hutmutter mit Dichtung
- 32: Gehäuseteil des Stutzenverschlusses
- 33: beweglicher Ring
- 34: Gegenhalter,
- 35: Gehäuse
- 36: Nut
- 37: Stutzenabsatz
- 38: Nut oder Spalt
- 39: Vorrichtung zum Befüllen von Schüttgut in einen schlauchförmigen Behältersack
- 40: Ende von Folienschlauch 7
- 41: Innenwand von Auslassstutzen 6
- 42: Druckluftanschluss, Zwischenraum, Ringraum, Ringkanal
- 43: Druckluftanschluss
- 44: Druckkanal, Druckluftleitung
- 45: Druckkanal Messung
- 46: Drucksensor
- 48: Wandteil bez. Außenwand von Auslassstutzen 6
- 49: Spalt in Kammer
- 50: Gewindemutter
- 51: Gewindespindel
- 52: Endanschlag
- 54: Traggestell
- 55: Behältersack
- 56a: Magnet
- 56b: Pneumatik- oder Elektrozylinder
- 56c: Zahnstangengetriebe
- 56d: Kniehebelspanner
- 56e: Excenter-Spannmechanik
- 56f: Gewindespindel
- 56g: Pneumatische Dichtung
- 57: Kolbenstange
- 58: Zahnstange
- 59: Verlängerungsgestänge
- 60: Gewindestange
- 61: C-förmige Profildichtung
- 62: Schraubenbolzen
- 63: Loch von 32
- 65: Öffnung in der Wand 64`
- 66: Inneres Gehäuseteil
- 67: Flansch
- 68: Äußere Wand des Gehäuseteils 66
- 69: Schraube
- 70: Metallband
- 71: Haken
- 72: Kniehebelverschluss
- 74: Klemm- und Abdichtvorrichtung
- 75: Klemm- und Abdichtvorrichtung
- 76: Klemm- und Abdichtvorrichtung
- 77: Klemm- und Abdichtvorrichtung
- 78: Klemm- und Abdichtvorrichtung
- 79: Klemm- und Abdichtvorrichtung
- 80: Klemm- und Abdichtvorrichtung
- 81: Klemm- und Abdichtvorrichtung
- 82: Bohrung in Stutzenabsatz 37
- 83: Hintere Fläche von Stutzenabsatz 37
- 84: Spannvorrichtung mit einem Schneckengewinde mit Stellschraube, Einkerbung
- 85: Längsmittelachse des Gehäuses 8
- 87: Bauteil entspricht einer Platte oder einem Dichtelement
- 89: Druckluftleitung
- 90: Nut oder Spalt für Dichtung 13

## Patentansprüche

1. Vorrichtung (39) zum Befüllen von Schüttgut aus einem Behälter bzw. Gehäuse (8) in einen schlauchförmigen Behältersack (4), der an das Auffanggehäuse (8) angeschlossen ist und dessen oberes Ende verschließbar ist, während das zweite oder untere Ende des Behältersacks (4) mit Hilfe von mindestens drei mit Bezug auf eine Mittelachse des Gehäuses (8) koaxial angeordneten Dichtungsringen (1, 2, 3) der Vorrichtung (39) derart verschließbar ist, dass insbesondere auch sehr kleine Partikel nicht nach außen in die Umgebungsluft abgegeben werden,
wobei die Vorrichtung (39) folgende Merkmale aufweist:
a) die einzelnen druckbeaufschlagbaren Dichtungsringe (1, 2, 3) sind mit Bezug auf die Längsmittelachse einer Vorrichtung (39) zum Befüllen von Schüttgut jeweils untereinander versetzt zueinander angeordnet;
b) der Behälter (8) der Vorrichtung (39) weist im Bereich seines unteren Endes einen auf- und abwärts beweglichen Deckel (5) auf;
c) an dem beweglichen Deckel (5) ist die erste Dichtung (1) fest angeordnet und gemeinsam mit dem beweglichen Deckel (5) auf- und abwärts verstellbar;
d) die zweite Dichtung (2) ist an dem feststehenden Gehäuse (8) der Vorrichtung (39) angeordnet;
e) die dritte Dichtung (3) ist zwischen der ersten und der zweiten Dichtung (1, 2) an dem feststehenden Gehäuse (8) der Vorrichtung (39) oder einem Gehäuseteil (66) der Vorrichtung (39) angeordnet;
f) ein zwischen zwei Dichtungen gebildeter Zwischenraum zur zeitweisen Aufnahme eines Teils des Folienschlauchs oder eines Behältersacks ist mit Bezug auf die Standfläche des Behälters nur nach unten gerichtet und/oder offen,
**dadurch gekennzeichnet, dass** in Füllrichtung gesehen der untere oder erste Dichtungsring (1) an den beweglichen Deckel oder Ringkörper (5) angeschlossen ist, wobei mit Bezug auf die Querebene der zweite Dichtring (2) mit Abstand zum ersten Dichtungsring (1) in etwa auf dem gleichen Durchmesser angeordnet ist und der Außendurchmesser der dritten Dichtung (3) mit der zweiten Dichtung (2) einen Zwischenraum oder Spalt (28) mit Bezug auf die Mittelachse der Vorrichtung (39) bildet, in den ein am Ringkörper (5) angeschlossener Steg (19) der Vorrichtung (39) eingeschoben ist und den schlauchförmigen Behältersack (4) abdichtet, wenn dieser in dem Zwischenraum oder Spalt (28) eingeklemmt ist.

2. Vorrichtung nach Anspruch 1
**dadurch gekennzeichnet,**
**dass** der am verstellbaren und/oder automatisch absenkbaren Deckel (5) angeordnete, mit Bezug auf den Behälter 8 nach oben ausgerichtete Steg (19) mit der daran angeschlossenen ersten Dichtung (1) zwischen die zweite und dritte Dichtung (2, 3,) von unten her eingeschoben ist und das Ende des schlauchförmigen Behältersacks (4) um den Steg (19) geführt und gegen die am feststehenden Gehäuse (8) angeschlossene Dichtung (2) und die Dichtung (3) anliegt.

3. Vorrichtung nach Anspruch 1 oder 2
**dadurch gekennzeichnet,**
**dass** zum Umfüllen des schüttfähigen Guts der bewegliche Deckel (5) vom unteren Teil des Gehäuses (8) abgesenkt ist und zur Aufnahme eines weiteren schlauchförmigen Behältersacks (4') dient, dessen Ende um den Steg (19) und die erste Dichtung (1) gelegt ist.

4. Vorrichtung nach Anspruch 1 oder 2
**dadurch gekennzeichnet,**
**dass** der weitere oder zweite Behältersack (4') mit Hilfe des Deckels (5) an einen am Gehäuse (8) befestigten Stutzen oder Anschlussteil (14) anschließbar ist und das Ende des zweiten Behältersacks (4') um den Steg (19) geführt ist, der in den Zwischenraum oder Spalt (28) zwischen der zweiten Dichtung (3) und dritten Dichtung (2) nach oben eingeschoben ist und den schlauchförmigen Behältersack (4) abdichtet, wobei die erste oder äußere Dichtung (1) mit Druckluft aktivierbar ist und die zweite und dritte Dichtung (2, 3) mit Druckluft versorgt sind.

5. Vorrichtung nach Anspruch 1 oder 2
**dadurch gekennzeichnet,**
**dass** der erste Behältersack (4) über einen am Gehäuse (8) seitlich angeordneten Auslassstutzen (6) entfernbar ist und der zweite Behältersack (4') über einen Verschluss (23) verschlossen und durch Entfernen öffnenbar ist, sodass das schüttbare Gut in einen dritten Behältersack (55) umgefüllbar ist, der mit Hilfe des ersten oder oberen und einem zweiten oder unteren Verschluss (23) verschlossen ist.

6. Vorrichtung nach Anspruch 1 oder 2
**dadurch gekennzeichnet,**
**dass** ein mit dem oder den Behältersäcken (4, 4',55) verbundener Druckluftkanal (45) an eine Druckluftleitung (44) oder die Dichtungen (1, 2, 3) zur Messung der Dichtigkeit des Behältersacks (4) oder der Behältersäcke (4, 4', 55) angeschlossen ist.

7. Vorrichtung nach Anspruch 1 oder 2
**dadurch gekennzeichnet,**
**dass** der Steg als ringförmiger Steg (19) ausgebildet ist, der an dem verstellbaren Deckel (5) oder einem Ringkörper angeschlossen ist, der als flacher oder dünner ringförmiger Baukörper ausgebildet ist.

8. Vorrichtung nach Anspruch 1 oder 7
**dadurch gekennzeichnet,**
**dass** der Steg (19) oder der flache oder dünne ringförmiger Baukörper mit Bezug auf die Standfläche des Behälters (8) nach oben oder in Richtung einer Einlassöffnung oder einer oberen Einlassöffnung des Behälters ausgerichtet ist und in etwa parallel zu einer Längsmittelachse (85) des Behälters (8) verläuft.

9. Vorrichtung nach Anspruch 1 oder 8
**dadurch gekennzeichnet,**
**dass** der Steg (19) oder der flache oder dünne ringförmige Baukörper koaxial zur Längsmittelachse (85) des Behälters (8) ausgerichtet ist.

10. Vorrichtung nach Anspruch 1 oder 9
**dadurch gekennzeichnet**
**dass** der Steg (19) oder der flache oder dünne ringförmige Baukörper mit dem Deckel (5) auf- und abwärts in Richtung der Längsmittelachse verstellbar ist und von unten her in den Spalt (28) zwischen zwei Dichtungen (2, 3) einschiebbar oder herausführbar ist und zur Aufnahme eines Teils eines Folienschlauchs (7) dient und das eine oder obere Ende des Spalts (82) mit Hilfe einer Dichtung oder einem am Gehäuseteil (14) angeschlossenen Bauteil oder Dichtelement (87) verschließbar ist.

11. Vorrichtung nach Anspruch 1 oder 9
**dadurch gekennzeichnet,**
**dass** der Steg (19) in Verbindung mit den beiden Dichtungen (2, 3) und einem Teil des Folienschlauchs eine Dichtungsvorrichtung bildet, mit deren Hilfe und mit Hilfe einer Stellvorrichtung oder einer pneumatischen Anlage der Behältersack (4) sicherbar und/oder abdichtbar ist.

## Claims

1. Device (39) for filling bulk material from a container or housing (8) into a tubular container bag (4), which is connected to the collecting housing (8) and the upper end of which can be closed, while the second or lower end of the container bag (4) can be closed with the aid of at least three sealing rings (1, 2, 3) of the device (39) arranged coaxially with respect to a central axis of the housing (8) in such a way that, in particular, even very small particles are not released to the outside into the ambient air,
wherein the device (39) comprises the following features:
a) the individual pressurizable sealing rings (1, 2, 3) are in each case arranged offset from each other amongst one another with respect to the longitudinal central axis of a device (39) for filling bulk material;
b) the container (8) of the device (39) in the region of its lower end comprises a cover (5) that is movable up and down;
c) the first seal (1) is firmly arranged on the movable cover (5) and can be adjusted upwards and downwards together with the movable cover (5);
d) the second seal (2) is arranged on the fixed housing (8) of the device (39);
e) the third seal (3) is arranged between the first and the second seals (1, 2) on the fixed housing (8) of the device (39) or a housing part (66) of the device (39);
f) an interspace formed between two seals for temporarily receiving a part of the film tube or a container bag is only oriented downwards and/or open at the bottom with respect to the base surface of the container,
**characterized in that**, viewed in the filling direction, the lower or first sealing ring (1) is connected to the movable cover or annular body (5), wherein the second sealing ring (2) is arranged at approximately the same diameter with respect to the transverse plane at a distance from the first sealing ring (1), and the outer diameter of the third seal (3) forms an intermediate space or gap (28) with respect to the central axis of the device (39) with the second seal (2), into which space a web (19) of the device (39) connected to the annular body (5) is inserted and seals the tubular container bag (4) when the latter is clamped in the intermediate space or gap (28).

2. Device according to claim 1,
**characterized in that**
the web (19) arranged on the adjustable and/or automatically lowerable cover (5) and oriented upwards with respect to the container (8) having the first seal (1) connected thereto is inserted between the second and third seals (2, 3) from below and the end of the tubular container bag (4) is guided around the web (19) and rests against the seal (2) connected to the stationary housing (8) and the seal (3) .

3. Device according to claim 1 or 2,
**characterized in that**
the movable cover (5) is lowered from the lower part of the housing (8) for transferring the bulk material and serves to receive a further tubular container bag (4'), the end of which is placed around the web (19) and the first seal (1).

4. Device according to claim 1 or 2,
**characterized in that**
the further or second container bag (4') is connectable to a port or connecting part (14) fastened to the housing (8) with the aid of the cover (5) and the end of the second container bag (4') is guided around the web (19), which is inserted upwards into the intermediate space or gap (28) between the second seal (3) and third seal (2) and seals the tubular container bag (4), wherein the first or outer seal (1) can be activated with compressed air and the second and third seals (2, 3) are supplied with compressed air.

5. Device according to claim 1 or 2,
**characterized in that**
the first container bag (4) is removable via a discharge port (6) arranged laterally on the housing (8) and the second container bag (4') is closed via a closure (23) and openable by removal, so that the bulk material is transferable into a third container bag (55), which is closed with the aid of the first or upper and a second or lower closure (23).

6. Device according to claim 1 or 2,
**characterized in that**
a compressed air duct (45) connected to the container bag or bags (4, 4', 55) is connected to a compressed air line (44) or the seals (1, 2, 3) for measuring the tightness of the container bag (4) or the container bags (4, 4', 55).

7. Device according to claim 1 or 2,
**characterized in that**
the web is configured as a ring-shaped web (19) which is connected to the adjustable cover (5) or an annular body which is configured as a flat or thin ring-shaped structure.

8. Device according to claim 1 or 7,
**characterized in that**
the web (19) or the flat or thin ring-shaped structure is oriented upwards or in the direction of an inlet opening or an upper inlet opening of the container with respect to the base surface of the container (8) and extends approximately parallel to a longitudinal central axis (85) of the container (8).

9. Device according to claim 1 or 8,
**characterized in that**
the web (19) or the flat or thin annular structure is oriented coaxially to the longitudinal central axis (85) of the container (8).

10. Device according to claim 1 or 9,
**characterized in that**
the web (19) or the flat or thin annular structure with the cover (5) is adjustable upwards and downwards in the direction of the longitudinal central axis and can be inserted or removed from below into the gap (28) between two seals (2, 3) and serves to receive a part of a film tube (7) and one or the upper end of the gap (82) can be closed with the aid of a seal or a component or sealing element (87) connected to the housing part (14).

11. Device according to claim 1 or 9,
**characterized in that**
the web (19), in conjunction with the two seals (2, 3) and a part of the film tube, forms a sealing device, with the aid of which and with the aid of an actuating device or a pneumatic system the container bag (4) can be secured and/or sealed.

## Revendications

1. Dispositif (39) pour le remplissage de matières en vrac à partir d'un récipient ou d'un boîtier (8) dans un sac récipient (4) en forme de tuyau, qui est raccordé au boîtier de réception (8) et dont l'extrémité supérieure peut être fermée, tandis que la deuxième extrémité ou l'extrémité inférieure du sac récipient (4) peut être fermée à l'aide d'au moins trois bagues d'étanchéité (1, 2, 3) du dispositif (39) agencées coaxialement par rapport à un axe médian du boîtier (8), de telle sorte que notamment même de très petites particules ne soient pas libérées vers l'extérieur dans l'air ambiant,
le dispositif (39) présentant les caractéristiques suivantes :
a) les bagues d'étanchéité (1, 2, 3) individuelles pouvant être soumises à une pression sont agencées de manière décalée les unes par rapport aux autres par rapport à l'axe médian longitudinal d'un dispositif (39) pour le remplissage de matières en vrac ;
b) le récipient (8) du dispositif (39) présente dans la zone de son extrémité inférieure un couvercle (5) mobile vers le haut et vers le bas ;
c) le premier joint d'étanchéité (1) est agencé de manière fixe sur le couvercle mobile (5) et peut être déplacé vers le haut et vers le bas conjointement avec le couvercle mobile (5) ;
d) le deuxième joint d'étanchéité (2) est agencé sur le boîtier fixe (8) du dispositif (39) ;
e) le troisième joint d'étanchéité (3) est agencé entre le premier et le deuxième joint d'étanchéité (1, 2) sur le boîtier fixe (8) du dispositif (39) ou sur une partie de boîtier (66) du dispositif (39) ;
f) un espace intermédiaire formé entre deux joints d'étanchéité, pour la réception temporaire d'une partie du tuyau en film ou d'un sac récipient, est dirigé et/ou ouvert uniquement vers le bas par rapport à la surface de support du récipient,
**caractérisé en ce que**, vu dans la direction de remplissage, la bague d'étanchéité inférieure ou première bague d'étanchéité (1) est raccordée au couvercle mobile ou corps annulaire (5), la deuxième bague d'étanchéité (2) étant agencée à distance de la première bague d'étanchéité (1) à peu près au même diamètre par rapport au plan transversal, et le diamètre extérieur du troisième joint d'étanchéité (3) formant avec le deuxième joint d'étanchéité (2) un espace intermédiaire ou une fente (28) par rapport à l'axe médian du dispositif (39), dans lequel une nervure (19) du dispositif (39), raccordée au corps annulaire (5), est insérée et étanchéifie le sac récipient (4) en forme de tuyau lorsque celui-ci est serré dans l'espace intermédiaire ou la fente (28).

2. Dispositif selon la revendication 1, **caractérisé en ce que** la nervure (19) agencée sur le couvercle (5) déplaçable et/ou abaissable automatiquement, orientée vers le haut par rapport au récipient 8, est insérée par le bas avec le premier joint d'étanchéité (1) qui y est raccordé entre le deuxième et le troisième joint d'étanchéité (2, 3), et l'extrémité du sac récipient (4) en forme de tuyau est guidée autour de la nervure (19) et s'applique contre le joint d'étanchéité (2) et le joint d'étanchéité (3) raccordés au boîtier fixe (8).

3. Dispositif selon la revendication 1 ou 2, **caractérisé en ce que**, pour le transvasement de la matière en vrac, le couvercle mobile (5) est abaissé de la partie inférieure du boîtier (8) et sert à recevoir un autre sac récipient (4') en forme de tuyau dont l'extrémité est placée autour de la nervure (19) et du premier joint d'étanchéité (1).

4. Dispositif selon la revendication 1 ou 2, **caractérisé en ce que** l'autre ou le deuxième sac récipient (4') peut être raccordé à l'aide du couvercle (5) à une tubulure ou à une pièce de raccordement (14) fixée au boîtier (8) et **en ce que** l'extrémité du deuxième sac récipient (4') est guidée autour de la nervure (19), qui est insérée vers le haut dans l'espace intermédiaire ou la fente (28) entre le deuxième joint d'étanchéité (3) et le troisième joint d'étanchéité (2) et qui étanchéifie le sac récipient (4) en forme de tuyau, le premier joint d'étanchéité ou joint d'étanchéité extérieur (1) pouvant être activé par de l'air comprimé et le deuxième et le troisième joint d'étanchéité (2, 3) étant alimentés en air comprimé.

5. Dispositif selon la revendication 1 ou 2, **caractérisé en ce que** le premier sac récipient (4) peut être enlevé par l'intermédiaire d'une tubulure de sortie (6) agencée latéralement sur le boîtier (8) et le deuxième sac récipient (4') est fermé par l'intermédiaire d'une fermeture (23) et peut être ouvert en l'enlevant, de telle sorte que la matière en vrac peut être transvasée dans un troisième sac récipient (55), qui est fermé à l'aide de la première fermeture ou fermeture supérieure et d'une deuxième fermeture ou fermeture inférieure (23).

6. Dispositif selon la revendication 1 ou 2 **caractérisé en ce qu'**un canal d'air comprimé (45) relié au ou aux sacs récipients (4, 4', 55) est raccordé à une conduite d'air comprimé (44) ou aux joints d'étanchéité (1, 2, 3) pour mesurer l'étanchéité du sac récipient (4) ou des sacs récipients (4, 4', 55).

7. Dispositif selon la revendication 1 ou 2, **caractérisé en ce que** la nervure est réalisée sous forme de nervure annulaire (19) qui est raccordée au couvercle déplaçable (5) ou à un corps annulaire qui est réalisé sous forme de corps annulaire plat ou mince.

8. Dispositif selon la revendication 1 ou 7, **caractérisé en ce que** la nervure (19) ou le corps annulaire plat ou mince est orienté vers le haut ou en direction d'une ouverture d'entrée ou une ouverture d'entrée supérieure du récipient (8) par rapport à la surface de support du récipient (8) et s'étend approximativement parallèlement à un axe médian longitudinal (85) du récipient (8).

9. Dispositif selon la revendication 1 ou 8, **caractérisé en ce que** la nervure (19) ou le corps annulaire plat ou mince est orienté coaxialement à l'axe médian longitudinal (85) du récipient (8).

10. Dispositif selon la revendication 1 ou 9, **caractérisé en ce que** la nervure (19) ou le corps annulaire plat ou mince peut être déplacé avec le couvercle (5) vers le haut et vers le bas en direction de l'axe médian longitudinal et peut être inséré par le bas dans la fente (28) entre deux joints d'étanchéité (2, 3) ou extrait de celle-ci et sert à recevoir une partie d'un tuyau en film (7), et l'une des extrémités ou l'extrémité supérieure de la fente (82) peut être fermée à l'aide d'un joint d'étanchéité ou d'un composant ou élément d'étanchéité (87) raccordé à la partie de boîtier (14).

11. Dispositif selon la revendication 1 ou 9, **caractérisé en ce que** la nervure (19) forme, en liaison avec les deux joints d'étanchéité (2, 3) et une partie du tuyau en film, un dispositif d'étanchéité à l'aide duquel le sac récipient (4) peut être sécurisé et/ou étanchéifié à l'aide d'un dispositif de réglage ou d'une installation pneumatique.
